# EUROPEAN PATENT SPECIFICATION

(11) **EP 4 018 820 B1**
(45) Date of publication and mention of the grant of the patent: **17.12.2025**
(21) Application number: 21216434.7
(22) Date of filing: 21.12.2021
(51) Int. Cl.: A01G 31/06, A01G 9/18, A01G 7/02, A01G 9/24

(54) **PLANT CULTIVATION APPARATUS**
PFLANZENZUCHTVORRICHTUNG
APPAREIL DE CULTURE DE PLANTES

(30) Priority: 22.12.2020 KR 20200181107
(43) Date of publication of application: 29.06.2022
(73) Proprietor: LG Electronics Inc., Seoul 07336 (KR)
(72) Inventor: KIM, Youngsuk, Seoul 08592 (KR)
(74) Representative: Frenkel, Matthias Alexander

(56) References cited:
- US-A1- 2014 318 012
- US-A1- 2017 013 793

## Description

### BACKGROUND OF THE DISCLOSURE

### Field of the Disclosure

The present disclosure relates to a plant cultivation apparatus, and relates to a plant cultivation apparatus that controls a growth rate of a plant using an air adjuster that controls a carbon dioxide concentration in a cultivation space.

### Discussion of the Related Art

A plant cultivation apparatus refers to an apparatus capable of plant cultivation by artificially supplying light energy, moisture, soil, and temperature necessary for plant growth. The plant cultivation apparatus has a predetermined cultivation space defined therein having an environment suitable for plant growth, and cultivates and stores the plant in the predetermined cultivation space.

Further, the plant cultivation apparatus may be having components for supplying moisture and nutrients necessary for plant growth. Further, the plant cultivated in the plant cultivation apparatus may be artificially supplied with light energy from the plant cultivation apparatus while not receiving light irradiated from the sun outside the plant cultivation apparatus.

Accordingly, the user may cultivate the plant by periodically supplying moisture or nutrients in the cultivation operation process of the plant. The plant cultivated in the plant cultivation apparatus may grow upon receiving nutrients, moisture and light energy supplied from the plant cultivation apparatus.

Further, the plant cultivation apparatus may provide a space in which the plant is cultivated. The plant may grow in the space, based on photosynthesis, upon receiving nutrients, moisture and light energy supplied from the plant cultivation apparatus.

Under the photosynthesis of the plant, the carbon dioxide concentration in the space may be reduced. For smooth plant growth, the plant cultivation apparatus introduces outside-air into the space using a component that introduces the outside-air into the space, so that a concentration of carbon dioxide in the space may be adjusted to be the same as that in the outside.

However, in a conventional plant cultivation apparatus, a harvest timing of the plant may not be controlled. Thus, when the user does not consume the plant in which the growth has been completed during the harvest timing thereof, the plant in which the growth has been completed has no choice but to be discarded.

Therefore, it is an important task in the present technical field to design a plant cultivation apparatus that allows the user to sufficiently consume the plant that has been completely grown by controlling the carbon dioxide concentration inside the plant cultivation apparatus to control the harvest timing of the plant.

US 2014/318012 A1 relates a plant growing device provided with a ventilation unit including an intake unit for taking air into a growing chamber and an exhaust unit for exhausting the air from the growing chamber. The inflow of outside-air is blocked in a circulation mode and the circulation mode is thereby not performed continuously.

### SUMMARY OF THE DISCLOSURE

The invention is achieved with the appended claims. Embodiments of the present disclosure are intended to provide a plant cultivation apparatus capable of controlling a growth rate of a plant using an air adjuster that adjusts a carbon dioxide concentration of a cultivation space inside a cabinet.

Further, embodiments of the present disclosure are intended to provide a plant cultivation apparatus that may reduce the growth rate of the plant by reducing the carbon dioxide concentration of the cultivation space.

Further, embodiments of the present disclosure are intended to provide a plant cultivation apparatus capable of reducing the growth rate of a plant by reducing the carbon dioxide concentration of the cultivation space at a timing desired by a user.

Further, embodiments of the present disclosure are intended to provide a plant cultivation apparatus capable of reducing the growth rate of the plant by reducing a temperature of the cultivation space and an amount of nutrient liquid supplied to the plant.

Embodiments of the present disclosure provide a plant cultivation apparatus including a cabinet, a bed, an air adjuster and a controller in order to achieve the above-described purposes. The cabinet has a cultivation space defined therein in which the plant is cultivated, the bed is disposed in the cultivation space, and a cultivator in which at least a portion of the plant is received is disposed on the bed.

The air adjuster is disposed in the cabinet and adjusts the carbon dioxide concentration of the cultivation space by adjusting an inflow amount of outside-air flowing into the cultivation space. The controller is disposed in the cabinet to control the air adjuster.

The air adjuster includes a blower fan to flow the outside-air, and the controller controls the air adjuster so that the carbon dioxide concentration is reduced to perform a delayed cultivation mode to reduce the growth rate of the plant.

The controller is configured to perform a default cultivation mode for controlling the air adjuster so that the inflow amount of the outside-air is equal to a preset default inflow amount. In the delayed cultivation mode, the inflow amount of the outside-air may be adjusted to be different from the default inflow amount, so that the carbon dioxide concentration in the delayed cultivation mode may be lower than that in the default cultivation mode.

The air adjuster includes: an outside-air channel communicating with outside air out of the cabinet, wherein the outside-air flows in and along the outside-air channel; an outside-air adjuster including the blower fan, wherein the outside-air adjuster is configured to control flow of the outside-air in and along the outside-air channel; and an inside-air adjuster for connecting the outside-air channel and the cultivation space with each other, wherein the inside-air adjuster includes a circulation fan for introducing the outside-air delivered through the outside-air channel into the cultivation space.

The bed divides the cultivation space into a plurality of sub-spaces arranged along one direction, wherein the outside-air channel extends along said one direction, wherein the inside-air adjuster includes a plurality of inside-air adjusters respectively communicating with the plurality of sub-spaces of the cultivation space, wherein the plurality of inside-air adjusters are connected to the outside-air channel.

The controller is configured to: perform a first disable process in which rotation of the blower fan is disabled at least once in the delayed cultivation mode; and to adjust a duration or execution times of the first disable process to adjust the inflow amount of the outside-air into the cultivation space.

The controller is configured to: perform a second disable process in which the rotation of the blower fan is disabled at least once in the default cultivation mode; and to adjust a duration or execution times of the second disable process to be different from the duration or execution times of the first disable process such that the inflow amount of the outside-air into the cultivation space in the delayed cultivation mode is adjusted to be different from the inflow amount of the outside-air into the cultivation space in the default inflow amount.

The apparatus further comprises a light emitter disposed inside the cabinet and including a light-emitting unit for irradiating light toward the cultivator, wherein the controller is configured to: perform a daytime mode to control the light emitter so that a light-amount from the light-emitting unit is equal to a preset reference light-amount; and perform a night mode to control the light emitter so that the light-amount from the light-emitting unit is lower than the reference light-amount.

The default cultivation mode includes a first default cultivation mode performed in the daytime mode, wherein the delayed cultivation mode includes a first delayed cultivation mode performed in the daytime mode.

The controller is configured to adjust a total execution duration of the first disable process in the first delayed cultivation mode to be larger than a total execution duration of the second disable process in the first default cultivation mode, thereby controlling the inflow amount of the outside-air in the first delayed cultivation mode to be lower than the inflow amount of the outside-air in the first default cultivation mode.

The controller is configured to adjust a duration of the first disable process in the first delayed cultivation mode to be larger than a duration of the second disable process in the first default cultivation mode, or to adjust execution times of the first disable process to be greater than execution times of the second disable process, such that the inflow amount of the outside-air in the first delayed cultivation mode is lower than the inflow amount of the outside-air in the first default cultivation mode.

The default cultivation mode includes a second default cultivation mode performed in the night mode, wherein the delayed cultivation mode includes a second delayed cultivation mode performed in the night mode, wherein the controller is configured to disable an operation of the blower fan in the second default cultivation mode to increase a concentration of the carbon dioxide in the cultivation space.

The controller is configured to operate the blower fan in the second delayed cultivation mode to control the inflow amount of the outside-air in the second delayed cultivation mode to be larger than the inflow amount of the outside-air in the second default cultivation mode, thereby controlling the concentration of the carbon dioxide in the cultivation space in the second delayed cultivation mode to be lower than the concentration of the carbon dioxide in the cultivation space in the second default cultivation mode.

The apparatus further comprises a temperature adjuster disposed in the cabinet to control a temperature of air flowing into the cultivation space, wherein the controller is configured to control the temperature adjuster so that the temperature of the cultivation space in the delayed cultivation mode is lower than the temperature of the cultivation space in the default cultivation mode, thereby lowering the growth rate of the plant in the delayed cultivation mode.

The apparatus further comprises a liquid supply disposed in the cabinet to supply nutrient liquid to the cultivator, wherein the controller is configured to control the liquid supply so that a supply amount of the nutrient liquid supplied to the cultivator in the delayed cultivation mode is lower than a supply amount of the nutrient liquid supplied to the cultivator in the default cultivation mode, thereby lowering the growth rate of the plant in the delayed cultivation mode.

The embodiments of the present disclosure may provide the plant cultivation apparatus capable of controlling the growth rate of a plant using the air adjuster that adjusts the carbon dioxide concentration of the cultivation space inside the cabinet.

Further, the embodiments of the present disclosure may provide the plant cultivation apparatus that may reduce the growth rate of the plant by reducing the carbon dioxide concentration of the cultivation space.

Further, the embodiments of the present disclosure may provide the plant cultivation apparatus capable of reducing the growth rate of the plant by reducing the carbon dioxide concentration of the cultivation space at a timing desired by the user.

Further, the embodiments of the present disclosure may provide the plant cultivation apparatus capable of reducing the growth rate of the plant by reducing the temperature of the cultivation space and the amount of nutrient liquid supplied to the plant.

Effects of the embodiments of the present disclosure are not limited to those as described above, and other effects as not mentioned above may be clearly recognized by those skilled in the art based on following descriptions.

### BRIEF DESCRIPTION OF THE DRAWINGS

FIG. 1 is a perspective view of a plant cultivation apparatus according to an embodiment of the present disclosure.
FIG. 2 is a perspective view in which a door is open in a plant cultivation apparatus according to an embodiment of the present disclosure.
FIG. 3 is a perspective view showing an inside of a cabinet in a plant cultivation apparatus according to an embodiment of the present disclosure.
FIG. 4 is an exploded view of a cabinet in a plant cultivation apparatus according to an embodiment of the present disclosure.
FIG. 5 is a side view showing an inside of a cabinet in a plant cultivation apparatus according to an embodiment of the present disclosure.
FIG. 6 is a perspective view showing an inside-air adjuster of an air adjuster of a plant cultivation apparatus according to an embodiment of the present disclosure.
FIG. 7 is a perspective view and a side view showing a liquid supply in a plant cultivation apparatus according to an embodiment of the present disclosure.
FIG. 8 is a block diagram illustrating a control mode performed by a controller in a plant cultivation apparatus according to an embodiment of the present disclosure.
FIG. 9 is a graph showing a rotation speed of a blower fan over time in each of a first delayed cultivation mode and a first default cultivation mode performed by a controller in a plant cultivation apparatus according to an embodiment of the present disclosure.
FIG. 10 is a graph showing a rotation speed of a blower fan over time in each of a second delayed cultivation mode and a second default cultivation mode performed by a controller in a plant cultivation apparatus according to an embodiment of the present disclosure.
FIG. 11 is a graph showing a light-amount from a light-emitting unit over time in each of a delayed cultivation mode and a default cultivation mode performed by a controller in a plant cultivation apparatus according to an embodiment of the present disclosure.
FIG. 12 is a graph showing a temperature inside a cultivation space over time in each of a delayed cultivation mode and a default cultivation mode performed by a controller in a plant cultivation apparatus according to an embodiment of the present disclosure.
FIG. 13 is a graph showing a supply amount of nutrient liquid from a liquid supply over time in each of a delayed cultivation mode and a default cultivation mode performed by a controller in a plant cultivation apparatus according to an embodiment of the present disclosure.

### DESCRIPTION OF SPECIFIC EMBODIMENTS

Hereinafter, embodiments of the present disclosure will be described in detail with reference to the accompanying drawings. Examples of various embodiments are illustrated and described further below. It will be understood that the description herein is not intended to limit the claims to the specific embodiments described. On the contrary, it is intended to cover alternatives, modifications, and equivalents as may be included within the scope of the present disclosure as defined by the appended claims

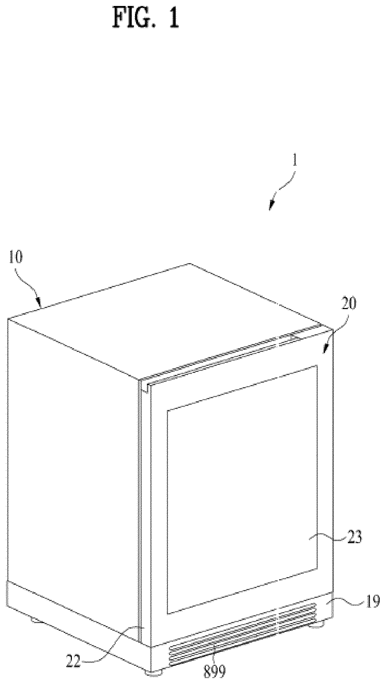

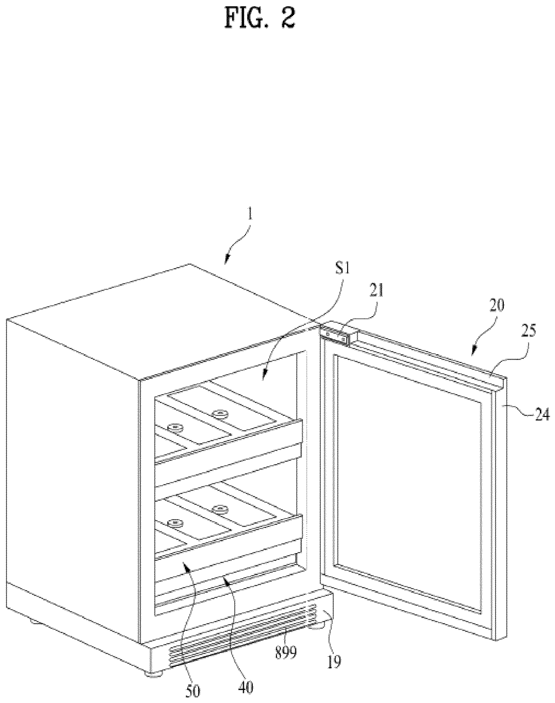

FIG. 1 is a perspective view of a plant cultivation apparatus 1 according to an embodiment of the present disclosure. FIG. 2 is a perspective view in which a door 20 is opened in the plant cultivation apparatus 1 according to an embodiment of the present disclosure.

As shown in FIG. 1 and FIG. 2, the plant cultivation apparatus 1 according to an embodiment of the present disclosure includes a cabinet 10 having a cultivation space S1 defined therein in which a plant is cultivated, and a door 20 for opening and closing the cabinet 10. An outer appearance of the apparatus 1 may be defined by the cabinet 10 and the door 20.

The plant cultivated in the cultivation space S1 may be of a type of a plant that may be eaten by a user, may be easily cultivated, and may not occupy a lot of space, such as leafy vegetables and herbs.

In one example, the cabinet 10 may have one open face having an opening defined therein. The cultivation space S1 may be defined in the cabinet 10. The cabinet 10 may have a rectangular parallelepiped shape as shown in the drawing, but is not necessarily limited thereto. The cabinet 10 may be formed in various forms such as a cylinder and a sphere as long as the cultivation space S1 may be defined therein.

Further, as shown in FIG. 1 and FIG. 2, the door 20 may be sized to shield the opening of the cabinet 10. Hereinafter, for convenience of descriptions, the open face defines a front face of the cabinet 10. However, the disclosure is limited thereto.

The door 20 may have a door panel 23 which is at least partially transparent. The door panel 23 may be made of a glass or a transparent plastic material such that the user may see through the panel 23 into an inside of the cabinet.

As the door panel 23 is disposed at a front face of the door 20, the user may visually check the inside of the cultivation space S1 even when the door 20 is closed. The user may check a growth state of the plant as cultivated in the cultivation space S1.

Further, a colored coating or a vapor deposited film may be attached to the door panel 23. The panel 23 may be configured such that the cultivation space S1 of the cabinet may be selectively visible to the user with the naked eye.

In one example, the door 20 may include a door frame 22 that constitutes a perimeter of the door. A central portion of the door frame 22 may be opened to define an opening. The door panel 23 may be constructed to shield the opening of the door frame 22.

Further, the door 20 may include a door sealing 24 disposed on one face of the door frame 22 facing toward the cabinet 10 and disposed along a perimeter of the opening of the door frame 22.

When the door 20 is closed, the door sealing 24 may contact the cabinet 10 and seal the cultivation space S1. The door sealing 24 may absorb an impact force exerted from the door 20 onto the cabinet 10 when the door 20 is closed, thereby improving durability and reliability of the plant cultivation apparatus 1.

Further, the door sealing 24 may prevent air flow from the cultivation space S1 and the cabinet 10 to the outside so that a temperature and a humidity of the cultivation space S1 may be kept constant. Further, the door sealing 24 may be made of an insulating material so that the cabinet 10 may be thermally insulated. Accordingly, the cultivation space S1 may maintain a temperature thereof set by the user.

In one example, the door 20 may have a door coupler 21 disposed on one side of the door frame 22 and coupled to the cabinet 10. As shown in FIG. 1 and FIG. 2, the door coupler 24 may be disposed on one side of left and right sides of the door frame 22. Accordingly, the door may be opened and closed in one direction of left and right directions around the user, thereby increasing the user's convenience.

Further, the door 20 may be rotatably coupled to the cabinet 10 via the door coupler 24. The cultivation space S1 may be opened and closed according to pivoting of the door 20.

Further, the door 20 may have a door handle 25 disposed at one of an upper end and a lower end of the door frame 22. The user may hold the handle 25 to open and close the door 20. When the door coupler 24 is disposed on one side of the left and right sides of the door frame 22, the door handle 25 may be disposed on the other side of the left and right sides of the door frame 22.

In one example, a lower cabinet 19 may constitute a bottom portion of the cabinet 10. The lower cabinet 10 may receive an air adjuster 80 therein that receive outside-air and supplies the outside-air to the cultivation space S1.

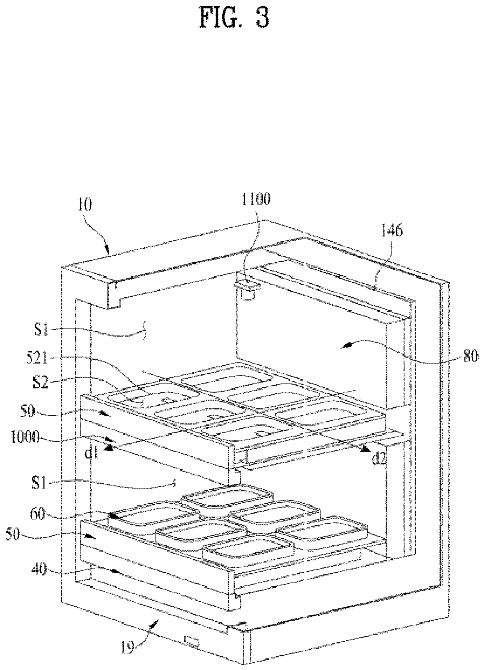

FIG. 3 is a perspective view showing an inside of the cabinet 10 having a imaging device 1100 in the plant cultivation apparatus 1 according to an embodiment of the present disclosure.

FIG. 3 shows a state in which the bed 50, the cultivator 60, and the imaging device 1100 are disposed inside the cabinet 10 in the plant cultivation apparatus 1 according to an embodiment of the present disclosure.

In the plant cultivation apparatus 1 according to an embodiment of the present disclosure, a plurality of beds 50 may be vertically arranged inside the cabinet 10.

Further, as shown in FIG. 3, in the plant cultivation apparatus 1 according to the embodiment of the present disclosure, two beds 50 may be respectively disposed in an upper portion and a lower portion of the cabinet 10.

Hereinafter, for convenience of description and understanding, the two beds 50 may be referred to as an upper bed 50 and a lower bed 50, respectively. In another example, at least three beds 50 may be arranged depending on a size of the cabinet 10.

Further, a plurality of cultivators 60 containing plant seeds and nutrients required for cultivation may be seated on a top face of the bed 50. Thus, the bed 50 may be referred to as a shelf or a tray. The interior of the cabinet 10 may act as the cultivation space S1 in which the plant is cultivated.

The bed 50 may be disposed inside the cabinet 10 so as to retract and extend through the front opening. When the user places the cultivator 60 on a top face of the bed 50 or separates the cultivator 60 from the bed 50, the user may extend the bed 50 out of the cabinet 10, thereby increasing the user's convenience.

Further, as will be described later, the bed 50 may have a water discharge channel 512 defined therein through which water supplied from a liquid supply 40 flows. The water discharge channel 512 may be constructed to supply the nutrient liquid required for the plant from the liquid supply 40 to the cultivator 60. The liquid supply 40 may include a liquid supply casing 42 having storage (not shown), a supply pump (not shown), and a branching valve (not shown) to be described later.

The storage (not shown) may supply the water required for the plant to the cultivator 60, and store the water required for the plant therein, and store water collected from the cultivator 60 therein.

In one example, the cultivator 60 may be provided to be adapted to a combination of various kinds of seeds and corresponding nutrients. The user may select the cultivator to be adapted to a target plant type for cultivation. Further, the bed 50 may have a structure on which the cultivator 60 may be seated and by which a seating state thereof may be maintained.

Further, cultivation medium 64 received in the cultivator 60 may contain plant seeds. Roots of the plant may extend through the cultivation medium and receive the nutrient liquid.

In one example, the cultivator 60 may be seated on the bed. The nutrient liquid (hereinafter, water) may be supplied from the liquid supply 40 through the water discharge channel 512 which will be described later to the cultivator 60. The cultivator 60 may be configured so that the water therefrom may be discharged to the storage (not shown) through the water discharge channel 512.

Further, a plurality of cultivators 60 may be arranged on the top face of the bed 50. Several types of plants may be cultivated in one cultivator 60 among the plurality of cultivators 60. In other words, the cultivator 60 may be provided to be adapted to a combination of various kinds of seeds and corresponding nutrients. The user may select a plant to be cultivated and cultivate the plant in the cultivator 60.

Further, the cultivator 60 may be seated on the bed 50 so as to be able to be separated from the bed 50. Thus, the user may input the cultivation medium 64 containing the seeds of the plant therein from a location out of the plant cultivation apparatus 1 into the cultivator 60. Then, the cultivator 60 may be seated onto the bed 50 through the front opening of the cabinet 10.

Further, when the plant grows and then a harvest timing arrives, the user may separate the cultivator 60 from the bed 50. Thus, the plant in the cultivator 60 may be easily harvested from a location out of the plant cultivation apparatus 1, thereby increasing easiness and convenience of harvesting by the user.

Further, the cultivator 60 may have a shape extending from one side thereof to the opposite side thereof. A direction in which the cultivator 60 extends may be a direction d1 from the cultivation space S1 toward the door 20. In some cases, the direction in which the cultivator 60 extends may be defined as any direction on the bed 50.

Further, as shown, while being seated on the top face of the bed 50, the plurality of cultivators 60 may be arranged to be spaced apart from each other in the direction d1 in which the cultivator 60 extends and a direction d2 perpendicular to the direction d1.

Hereinafter, for convenience of description, a direction in which the cultivator 60 extends is defined as a first direction d1, while a direction perpendicular to the direction d1 is defined as a second direction d2.

The first direction d1 may be a forward direction from the cultivation space S1 toward the door 20, while the second direction d2 may be a lateral direction in which opposing side faces of the cabinet 10 face toward each other.

In one example, the bed 50 may be embodied as a rectangular plate that partitions an inside of the cabinet 10. Although not shown in the drawing, the bed 50 may be seated into a retract and extend guide (not shown) defined in each of both opposing side faces of the cabinet 10 in the retracting and extending manner as described above.

As will be described later, a bed water collector 524 constructed to receive water through the liquid supply 40 may be formed in one side of the bed 50. The bed water collector 524 may be connected to the water discharge channel 512 disposed inside the bed 50, such that the water supplied to the bed water collector 524 may be continuously supplied to the cultivator 60.

In one example, the plant cultivation apparatus 1 according to an embodiment of the present disclosure includes the imaging device 1100 disposed inside the cabinet 10 to image the cultivator 60.

The imaging device 1100 may be embodied as a camera that may obtain visual information by photographing the cultivator 60 or the bed 50. The imaging device 1100 may generate an image of the cultivator 60 or the bed 50 by acquiring light reflected from the cultivator 60 or the bed 50. Alternatively, the imaging device 1100 may include various visual information acquisition devices capable of acquiring a visual image of the cultivator 60 or the bed 50.

In one example, a display device 1000 may be mounted on the open front face of the cabinet 10. The display device 1000 may output an operating state of the plant cultivation apparatus 1 to an outside. The display device 1000 may have a manipulator (not shown) for the user to input a manipulation input thereto. The user may perform an input manipulation using the manipulator (not shown) and set and input all operations of the plant cultivation apparatus 1 using the display device 1000. The display device 1000 may include a touch screen structure, or may include a structure such as a buttons or a switch.

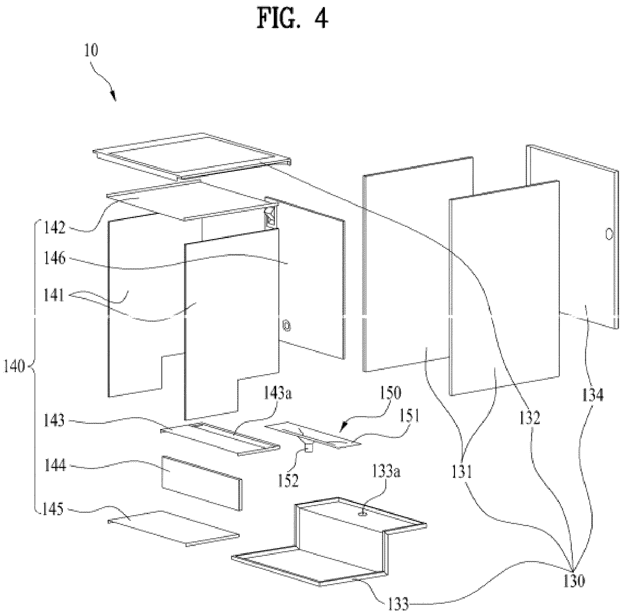

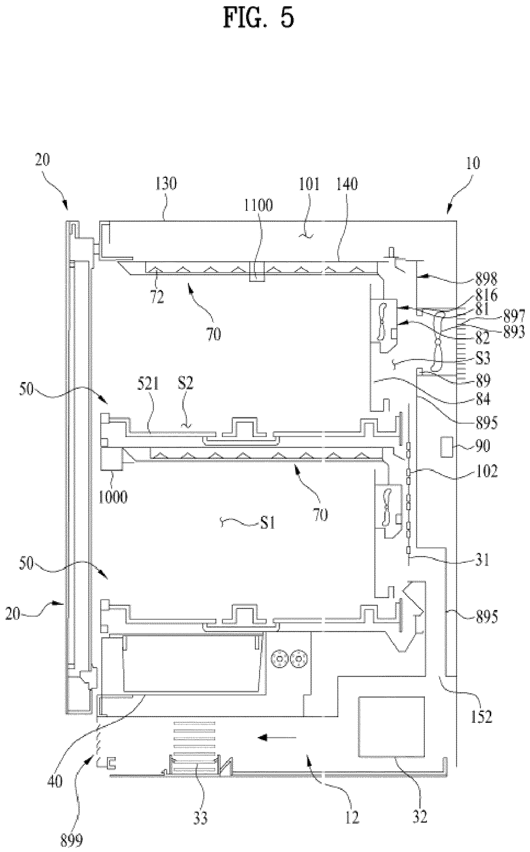

FIG. 4 is an exploded view of the cabinet 10 in the plant cultivation apparatus 1 according to an embodiment of the present disclosure. FIG. 5 is a side view showing the inside of the cabinet 10 in the plant cultivation apparatus 1 according to an embodiment of the present disclosure.

As shown in FIG. 4, the cabinet 10 may include an outer casing 130 defining an outer appearance and an inner casing 140 defining the cultivation space. Further, a heat insulating material 101 may be disposed between the outer casing 130 and the inner casing 140. Thus, in the plant cultivation apparatus 1 according to an embodiment of the present disclosure, the cultivation space S1 inside the cabinet 10 and the outside of the cabinet 10 may be thermally insulated from each other via the heat insulating material 101.

Further, the outer casing 130 may be made of a metal material, and may be composed of at least one plate defining an outer face of the cabinet 10. Further, the outer casing 130 may include a pair of outer side plates 131 respectively defining both left and right opposing side faces of the outer face of the cabinet 10, and an outer upper plate 132 defining a top face of the outer face of the cabinet 10, an outer rear plate 134 defining a rear face of the outer face of the cabinet 10, and an outer lower plate 133 defining a bottom face of the outer face of the cabinet 10.

Further, the outer lower plate 133 may be bent such that a machine room 12 may be defined in a bottom portion of a rear portion of the cabinet 10. As will be described later, the machine room 12 may receive therein a compressor 32, a condenser 33, etc. The machine room 12 may act as a separate space from the cultivation space S1.

As shown in FIG. 5, the controller 90 may be disposed on a rear face of the cabinet 10, that is, a back face of the outer rear plate 134. The controller 90 may be configured to control all operations of the plant cultivation apparatus. The controller 90 may include a compressor PCB (not shown) separately disposed to control the compressor 32.

Further, the controller 90 may be configured to receive the image taken from the imaging device 1100 to identify the state of the plant, and may be configured to control the air adjuster 80 to reduce the concentration of the carbon dioxide in the cultivation space, thereby reducing the growth rate of the plant to perform the delayed cultivation mode.

Further, although not shown, a carbon dioxide concentration measurement sensor (not shown) for measuring the carbon dioxide concentration of the cultivation space S1 is disposed inside the cabinet. The carbon dioxide concentration measurement sensor (not shown) may be constructed to transmit data about the carbon dioxide concentration in the cultivation space S1 to the controller 90.

The inner casing 140 may be composed of a plurality of plates defining the cultivation space S1 inside the cabinet 10. At least portion of the inner casing 140 may be made of a plastic material. Further, the inner casing 140 may be made of a metal material having excellent thermal conductivity, such as aluminum. The inner casing 140 made of the metal has excellent heat transfer performance, so that the cultivation space S1 may have a uniform temperature distribution when heating or cooling the cultivation space S1.

Further, the inner casing 140 may be constructed to reflect light emitted from the light emitter 70. The light emitted from the light emitter 70 may be reflected from a surface of the inner casing 140 made of the metal material so that the light may be evenly irradiated to the plants in an entire area of the bed 50, thereby eliminating a shaded area to which light is not irradiated. To this end, the surface of the inner casing 140 may be further subjected to surface treatment, painting or film attachment to improve reflective performance.

Further, the inner casing 140 may include inner side plates 141 respectively defining both opposing side faces of the inner casing 140, an inner upper plate 142 defining a top face of the inner casing 140, an inner rear plate 146 defining a rear face of the inner casing 140, and inner lower plates 143, 144, and 145 defining a bottom face of the inner casing 140.

The evaporator 31 may be disposed on a front face of the inner rear plate 146. A temperature adjuster 102 may be disposed on a back face of the inner rear plate 146. Accordingly, heating and cooling of the air introduced into the cultivation space S1 from a location in rear of the cultivation space S1 may be performed.

Further, the evaporator 31 may be positioned between the inner rear plate 146 and the air adjuster 80, and may be cooled with refrigerant flowing under an operation of the compressor 32. Further, the cooled air from the evaporator 31 circulates inside the cultivation space S1 through the air adjuster 80 to uniformly cool the cultivation space S1.

The temperature adjuster 102 may be disposed on the back face of the inner rear plate 146, and may be constructed to be buried in the insulation material 101. The temperature adjuster 102 may be disposed in an area corresponding to the evaporator 31. Air heated according to the operation of the temperature adjuster 102 may be introduced into the cultivation space S1 through the air adjuster 80 and may circulate through the cultivation space S1. Further, the temperature adjuster 102 is located in the area corresponding to the evaporator 31. Thus, when the evaporator 31 is frozen, the temperature adjuster 102 may operate to defrost the evaporator 31.

A temperature suitable for plant growth may be maintained in the cultivation space S1 under the operations of the evaporator 31 and the temperature adjuster 102. Although not shown in the drawing, the plant cultivation apparatus 1 according to an embodiment of the present disclosure may include a temperature sensor (not shown) disposed in the cabinet 10 to measure a temperature in the cultivation space S1. The controller may receive data from the temperature sensor (not shown), and may control the temperature of the cultivation space S1 so as to be kept constant irrespective of a temperature of a location of out of the cabinet 10.

In one example, the inner lower plates 143, 144, and 145 may have a shape corresponding to the bent shape of the outer lower plate 133, and include a first lower plate 143, a second lower plate 144 and a third lower plate 145. The first lower plate 143 and the second lower plate 144 and the third lower plate 145 may be combined with each other.

The first lower plate 143 may have a return duct hole 143a defined therein to which a return duct 150 is mounted. The return duct 150 may have a structure in communication with the machine room 12 so that air inside the cultivation space S1 may be discharged to the machine room 12.

The return duct 150 may include a duct mount 151 mounted to the return duct hole 143a, and an outside-air outlet 152 extending from a center of the duct mount 151 through an opening 133a of the outer lower plate 133 into the machine room 12.

The duct mount 151 may be disposed on a bottom of the inner rear plate 146 and a bottom of the evaporator 31. The duct mount may be constructed such that dew condensation occurs on the evaporator 31, water is discharged to the machine room 12. Further, a drain pan (not shown) for collecting water discharged through the return duct 150 may be disposed inside the machine room 12.

In one example, the imaging device 1100 is disposed inside the cabinet 10 to image the cultivator 60. The imaging device 1100 may be configured to image the cultivator 60 or the bed 50 and transmit data about the image to the controller 90. For example, the imaging device may be embodied as a camera and the like.

The imaging device 1100 may extend through the light emitter 70 and be coupled to the cabinet 10 as shown in FIG. 5. The imaging device 1100 may be coupled to an inner face of the door frame 22 and may be configured to photograph the cultivator 60 or the bed 50.

In one example, the plant cultivation apparatus 1 according to an embodiment of the present disclosure may include the air adjuster 80 that is disposed in the cabinet 10 and includes a circulation fan 82 that circulates air in the cultivation space S1.

Further, the air adjuster 80 may include a blower fan 893 which is configured to introduce the outside-air into the cabinet 10. Specifically, the air adjuster 80 may include an outside-air channel 895 and the blower fan 893. The air adjuster 80 may include an outside-air adjuster 89 which may communicate with an outside out of the cabinet 10 and flow the outside-air.

Further, the air adjuster 80 may include an inside-air adjuster 81. The inside-air adjuster 81 may be configured to connect the outside-air channel 895 and the cultivation space S1 to each other. The circulation fan 82 may be configured to introduce the outside-air flowing through the outside-air channel 895 into the cultivation space.

Specifically, the outside-air channel 895 may be constructed to pass through the cabinet 10, and may be disposed between the inner rear plate 146 and the inside-air adjuster 81.

The outside-air channel 895 may include the machine room 12. As shown, the outside-air channel 895 may include an outside-air inlet 898 for receiving the outside-air as defined in a back face of the cabinet 10 and an outside-air outlet 899 for discharging the outside-air as defined in the front face of the cabinet 10.

The outside-air inlet 898 may be disposed at a top portion of the back face of the cabinet 10, and may be defined in one face of the outer rear plate 134. The outside-air outlet 899 may be disposed at a bottom portion of the front face of the cabinet 10 and may be defined in the front face of the lower cabinet 19.

At least one of the outside-air inlet 898 and the outside-air outlet 899 may be constructed to be opened or closed. At least one of the outside-air inlet 898 and the outside-air outlet 899 may be opened when the carbon dioxide is supplied to the cultivation space S1.

Further, the cultivation space S1 may be divided into a plurality of sub-spaces via the bed 50. The sub-spaces may be arranged along one direction. The outside-air channel 895 may extend along said one direction in which the plurality of sub-spaces of the cultivation space S1 are arranged. The inside-air adjuster 81 may be disposed in each of the plurality of sub-spaces of the cultivation space S1 to introduce the outside-air from the outside-air channel 895 into each of the plurality of sub-spaces of the cultivation space S1.

The machine room 12 may communicate with an air-flow space S3 defined inside the outside-air channel 895 through the outside-air outlet 899. The outside-air inflowing through the outside-air inlet 898 may flow into the machine room 12 through the outside-air outlet 899.

In other words, the air in the cultivation space S1 may be discharged to the air-flow space S3 through the inside-air adjuster 81, and may be discharged from the air-flow space S3 through the return duct 150 to the outside-air outlet 899.

The blower fan 893 may be disposed in the outside-air channel 895, and may suck the outside-air from the outside-air inlet 898 to provide power to flow the outside-air to the outside-air outlet 899. The blower fan 893 may be disposed in a position adjacent to the outside-air inlet 898 of the outside-air channel 895. As long as the blower fan 893 sucks the outside-air from the outside-air inlet 898 to allow the outside-air to flow into the outside-air outlet 899, the blower fan may be disposed at any position on the outside-air channel 895.

Further, the evaporator 31 and the temperature adjuster 102 may be disposed on the outside-air channel 895 which may be constructed to communicate with the inside-air adjuster 81. Further, the outside-air channel 895 may include the machine room 12. The outside-air to be guided to the outside-air outlet 899 may flow through the inside-air adjuster 81, the evaporator 31, the temperature adjuster 102, the machine room 12, the compressor 32, and the condenser 33 in this order and then may be discharged to the outside-air outlet 899.

Further, the outside-air adjuster 89 may include an air filter 897 disposed at the outside-air inlet 898 to remove foreign substances from the outside-air coming from the outside out of the cabinet 10. The air filter 897 may be disposed at the outside-air outlet 899. The air filter may be disposed at the outside-air inlet 898 to prevent foreign substances from entering the outside-air channel 895. The air filter 897 may be made of a mesh type material, and may be constructed to be detachable from the outside-air inlet 898, so that the user may separate the air filter 897 from the outside-air inlet 898 to remove foreign substances such as dusts therefrom.

Further, the outside-air adjuster 89 may include an outside-air flow sensor 896 that is disposed in front of the blower fan 893 and in the outside-air channel 895 and measures a flow rate of the outside-air introduced into the outside-air channel 895 under the operation of the blower fan 893.

The outside-air flow sensor 896 may be configured to transmit/receive data to/from the controller 90, and may be configured to measure an inflow amount of the outside-air flowing into the outside-air channel 895 in each of a delayed cultivation mode S200 and a default cultivation mode S300 as described later.

In one example, the circulation fan 82 of the inside-air adjuster 81 may introduce the outside-air flowing into the outside-air channel 895 into the cultivation space S1. The circulation fan 82 and the blower fan 893 may operate or stop at the same time. In this way, when the operation of the blower fan 893 is disabled, a situation may be prevented in which the outside-air enters the cabinet 10 under the operation of the circulation fan 82.

Further, the rotation speeds of the circulation fan and the blower fan may be equal to each other. When the controller 90 controls the operation and the rotation speed of the blower fan 893, the controller 90 may control the operation and the rotation speed of the circulation fan 82 so as to be equal to those of the blower fan.

The inside-air adjuster 81 may be disposed in front of the evaporator 31, and may be disposed in each of the sub-spaces of the cultivation space S1 as divided via the bed 50.

The plurality of inside-air adjusters 81 may be arranged in one direction in which the sub-spaces of the cultivation space S1 are arranged, and may have the same structure and shape and may have different vertical levels. Further, the number of the inside-air adjusters 81 may be equal to the number of beds 50. Each inside-air adjuster may move the air in a direction from a rear side of the bed 50 to a front side thereof. Therefore, independent air circulation may occur in each of the sub-spaces of the cultivation space S1 as divided via the bed 50.

Further, the air inside the cultivation space S1 may circulate therein under the operation of the air adjuster 80. The circulating air may pass by the evaporator 31. Thus, an entire interior of the cultivation space S1 may have a uniform temperature. The temperature of the cultivation space S1 may be rapidly controlled.

Further, the air circulating under the operation of the inside-air adjuster 81 may flow by a top face of the bed 50 and a bottom face of the light emitter 70. The air flowing under the operation of the inside-air adjuster 81 may pass by the top face of the bed 50 and thus may allow the plant grown in the cultivator 60 seated on the bed 50 to breathe smoothly and the plant to shake, thereby providing optimal airflow for controlling the stress of the plant and required for the plant growth.

Further, the inside-air adjuster 81 may discharge, at a top thereof, the air heated or cooled under the operation of the temperature adjuster 102 or the evaporator 31. The inside-air adjuster 81 may suck the air from a position adjacent to the top face of the bed 50, such that the air may circulate in the cultivation space S1.

A plurality of circulation fans 82 may be independently controlled by the controller 90, thereby independently controlling the circulation of the air in each of the sub-spaces of the cultivation space S1.

Further, the temperature adjuster 102 and the evaporator 31 may be disposed between a top and a bottom of the inner rear plate 146, and may at least partially overlap a portion of each of the inside-air adjusters 81 respectively disposed above and below the temperature adjuster 102 and the evaporator 31. Accordingly, the air heated and cooled under the operations of the temperature adjuster 102 and the evaporator 31 may circulate under the operation of the inside-air adjuster 81.

Further, one temperature adjuster 102 and one evaporator 31 may allow all of the sub-spaces of the cultivation space S1 to be cooled or heated uniformly. The inside-air adjuster 81 may be spaced apart from the inner rear plate 146 to facilitate the inflow of cooled or heated air, and may be constructed so as not to interfere with the evaporator 31.

Further, the inside-air adjuster 81 may be configured such that an upper end thereof is coupled to a portion of a rear part of the light emitter 70. While the air adjuster 80 is mounted inside the cultivation space S1, the air adjuster may shield the components disposed on the inner rear plate 146 including the evaporator 31 and thus prevent exposure of the components to the outside.

In one example, the plant cultivation apparatus 1 according to an embodiment of the present disclosure may include the light emitter 70 including the light-emitting unit 72 for irradiating the light toward the cultivator disposed in the cabinet 10.

The light emitter 70 may be disposed above the bed 50, and may irradiate light toward the bed 50 to provide light necessary for the growth of the plant. The light-amount of light from the light irradiated from the light emitter 70 may be set to substantially similar to that from the sunlight. Optimized light-amount and irradiation time duration may be allocated to a type of the plant being cultivated.

When the light emitter 70 is turned on while the door 20 is closed, the inside of the cultivation space S1 may be brightened and thus the inside of the cabinet may be visible through the door panel 23. Further, when power supply to the light emitter 70 is cut off while the door 20 is closed, the inside of the cultivation space S1 may be darkened, and the cultivation space S1 may not be visible due to a color or optical characteristics of the door panel 23.

Further, the air flowing under the operation of the air adjuster 80 passes by a bottom face of the light emitter 70 to prevent overheating of the light emitter 70. In other words, the air adjuster 80 may be disposed at an upper vertical level adjacent to a lower end of the light emitter 70 and to the bed 50.

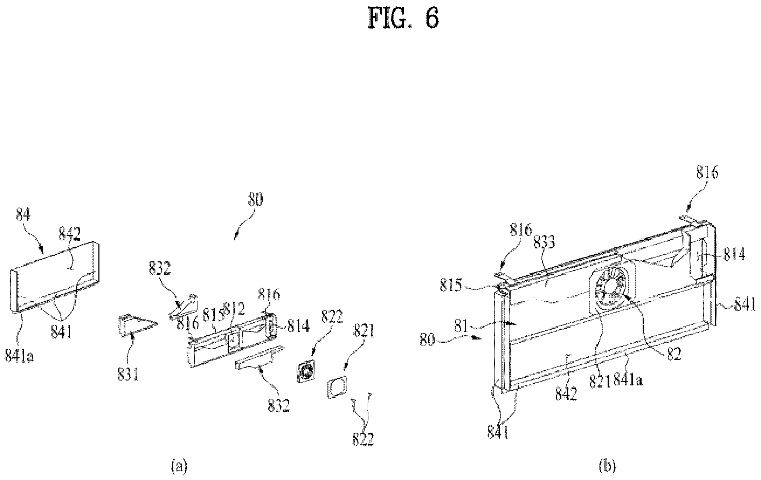

In one example, FIG. 6 is a perspective view showing the inside-air adjuster 81 of the air adjuster 80 of the plant cultivation apparatus 1 according to an embodiment of the present disclosure. (a) in FIG. 6 is an exploded view of the inside-air adjuster 81, and (b) of FIG. 6 is a perspective view of the inside-air adjuster 81.

As shown in the drawings, the inside-air adjuster 81 may include the circulation fan 82, an inside-air adjuster body 81 to which the circulation fan 82 is mounted, and an inside-air adjuster cover 84 for shielding a portion of the inner rear plate 146 and the inside-air adjuster body 81.

In detail, the circulation fan 82 may have a box fan shape, and may be disposed in a center of the inside-air adjuster body 81.

Further, the circulation fan 82 may discharge the air inside the outside-air channel 895 in a direction from a position in rear of the inside-air adjuster 81 to a position in front thereof. The inside-air adjuster body 81 may provide a space in which the circulation fan 82 is installed, and may be constructed to guide the discharge of the air discharged under the operation of the circulation fan 82. The inside-air adjuster body 81 may be made of plastic, and may be injection-molded. A circulation fan receiving portion which is recessed to have a shape corresponding to the circulation fan 82 may be formed in a center of the back face of the inside-air adjuster body 81. Further, an air hole 812 may be defined in the circulation fan receiving portion to allow air to flow into the circulation fan 82 when the circulation fan 82 rotates.

In one example, an inside-air guide 832, 833 may be formed on a front face of the inside-air adjuster body 81 such that the air discharged from the circulation fan 82 may be guided upward. The inside-air guide 832, 833 may be disposed on each of left and right sides of the circulation fan receiving portion.

The inside-air guide 832, 833 may extend from a lower end of the circulation fan receiving portion toward both opposing sides, and may have an inclination that is gradually and upwardly inclined as the guide extends. Therefore, the air discharged under the operation of the circulation fan 82 may flow along the inclination. Thus, as the guide extends outwardly, the guide may get closer to the outside-air outlet defined at an upper end of the inside-air adjuster body 81.

Further, an upwardly extending rib may be further formed on a top face of the inside-air guide 832, 833. The rib may extend upwardly from the inside-air guide 832, 833, and may extend in a direction perpendicular to the upper end of the inside-air adjuster body 81. The rib may be connected to an inner face of the inside-air adjuster body 81. Therefore, while the rib reinforces the inside-air guide 832, 833, the rib may upwardly guide the air flowing along the inside-air guide 832, 833. Due to the above structure of the inside-air guide 832, 833 and the rib , the air discharged from the circulation fan 82 may be evenly discharged from an entire area of the outside-air outlet of the inside-air adjuster body 81.

In one example, an inner-air discharge guide 815 may be defined in an upper end of the front face of the inside-air adjuster body 81. The inside-air discharge guide 815 guides the air discharged from the circulation fan 82 to be discharged to a position in front of the inside-air adjuster body 81. The inside-air discharge guide 815 may define a face that gradually and increasingly protrudes in a frontward direction as the face extends in a direction from a bottom to a top thereof.

That is, the inside-air discharge guide 815 defines an inclined face or a round face, and guides the air flowing in a direction from the bottom to the top in a frontward direction. In this connection, an end of the inside-air discharge guide 815 is adjacent to a bottom face of the light emitter 70, so that the air discharged from the inside-air adjuster 81 may flow in a frontward direction from a rear end of the bottom face of the light emitter 70 under the guidance of the inside-air discharge guide 815. This air flow may allow the light emitter 70 to be cooled when the light emitter 70 heats up.

A connective hole 814 may be defined in one side face of the inside-air adjuster body 81. The connective hole 814 may be opened at a position corresponding to each of connectors and 812 mounted on the inner rear plate 146. Therefore, when the inside-air adjuster 81 is installed, each of the connectors and 812 may be inserted into the connective hole 814 so that the connectors do not interfere with each other. Further, an electric wire may be connected to the circulation fan 82 through the connective hole 814.

A state may be maintained in which the circulation fan 82 is mounted into and is fixed to the circulation fan receiving portion via a plate-shaped fan securing member 821 mounted to the circulation fan receiving portion and a screw 822 that passes through the fan securing member 821 and is fastened to the inside-air adjuster body 81.

A blower bracket 816 to be inserted into the cabinet 10 may be disposed on each of left and right sides of a top face of the inside-air adjuster body 81. The blower bracket 816 may have a vertically bent shape. One end of the blower bracket 816 may be coupled to a top face of the inside-air adjuster body 81, while the other end thereof may be mounted on a portion of the cabinet 10 formed on a rear end of a bottom face of the light emitter 70. Therefore, the light emitter 70 and the inside-air adjuster 81 may be coupled to each other in a vertically intersecting manner. Further, the inside-air adjuster 81 may discharge the air from the rear end of the light emitter 70 in a frontward direction.

In one example, the inside-air adjuster cover 84 may shield the inside-air adjuster body 81 and all the components mounted on the inside-air adjuster body 81 while being disposed in front of the inside-air adjuster body 81. Further, while the inside-air adjuster 81 is installed, the inside-air adjuster cover 84 may define an outer appearance of a rear wall of the cultivation space 11.

The inside-air adjuster cover 84 may be made of the same metal material as that of the inner side plate 141, and may be formed by bending a platelike material. The inside-air adjuster cover 84 may have an edge portion 84 bent along a perimeter thereof. The inside-air adjuster body 81 to which the circulation fan 82 is mounted may be accommodated in an inner space defined by the edge portion 841.

A top face of the inside-air adjuster cover 84 may be open and may coincide with the upper end of the inside-air adjuster body 81. Therefore, the air discharged along the inside-air discharge guide 815 may be discharged through the open top face of the inside-air adjuster cover 84.

Both opposing side portions of the edge portion 841 may respectively cover both opposing side faces of the inside-air adjuster body 81. Further, the inside-air adjuster cover 84 may extend downwards beyond the inside-air adjuster body 81. The inside-air adjuster cover 84 may extend to the top face of the bed 50. Therefore, when the inside-air adjuster 81 is installed, the inside-air adjuster cover 84 may define a rear wall face of a space corresponding to a space between the light emitter 70 and the bed 50. Further, the inside-air adjuster cover 84 may screen the components mounted on the inner rear plate 146 to make an outer appearance of a rear face of the cultivation space very neat.

In one example, a portion of the edge portion 841 defining a bottom face of the inside-air adjuster cover 84 has a width shorter than that of each of the both opposing side faces thereof. Therefore, the bottom face of the inside-air adjuster cover 84 may be spaced apart from the inner rear plate 146, thereby defining a gap through which air may flow. That is, in a state in which the inside-air adjuster 81 is mounted, a bottom face of the inside-air adjuster cover 84 may have an inlet defined therein through which the air is sucked.

Further, an end portion of the edge portion 841 defining the bottom face of the inside-air adjuster cover 84 may be bent downward to define a bent portion 841a. The bent portion 841a may further extend downwardly from a rear portion of the bed 50. Therefore, while shielding the components on the inner rear plate 146, the bent portion 841a may screen a lower end of the inside-air adjuster cover 84, thereby achieving a neat outer appearance of the inside-air adjuster. Further, the bent portion 841a may be spaced apart from each of the rear end of the bed 50 and the inner rear plate 146, thereby defining an inlet for receiving the air flowing into the inside-air adjuster cover 84.

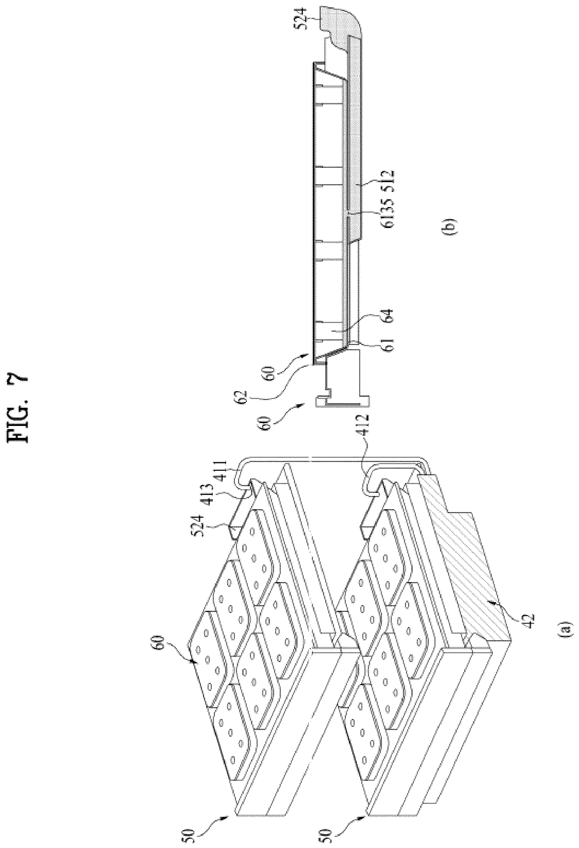

In one example, FIG. 7 is a perspective view and a side view showing the liquid supply 40 in the plant cultivation apparatus according to an embodiment of the present disclosure.

(a) in FIG. 7 is a perspective view showing the liquid supply 40, the bed 50, and the cultivators 60 in the plant cultivation apparatus 1 according to an embodiment of the present disclosure. (b) in FIG. 7 is a side view of the liquid supply 40. Hereinafter, duplicate descriptions of the above-described structures will be omitted.

The cultivator 60 may include a cultivation vessel 61 seated on the bed 50 and having an open top, and a cover 62 shielding the open top of the cultivation vessel 61.

The cultivation vessel 61 may have the open top and may have a size and a shape corresponding to those of a vessel receiving portion 521 as shown in FIG. 5 which constitutes the top face of the bed 50 such that the vessel 61 is received in the vessel receiving portion 521.

The cultivation vessel 61 may have a size set so to be accommodated in the vessel receiving portion 521. Therefore, the user may select the cultivator 60 adapted to a type of the plant to be cultivated and may seat the cultivator 60 at a desired position on the bed 50 to start cultivation of the plant.

In one example, the cultivation vessel 61 may contain a cultivation medium 64 in which at least a portion of the plant is received therein. Nutrients necessary for plant growth may be contained in the cultivation medium 64. The vessel 61 may be configured so that even when there is no additional nutrient supply thereto, the plant growth is achieved at an appropriate rate when only water is supplied thereto.

In one example, when the water supplied to the cultivation medium 64 is exposed to the light irradiated from the light emitter 70 and the air outside the cultivator 60, proliferation of microorganisms in the water may be activated. This may adversely affect the plant growth. To prevent this situation, the cover 62 may be constructed to shield the inside of the cultivation vessel 61.

In one example, the cultivator 60 may further include an indicator disposed on a top face of the cover 62 to minimize exposure of the cultivation medium 64. A seed name of the plant may be written on the indicator. The indicator may have the seed name of the plant written thereon, so that the type of the plant grown in the cultivation space S1 may be easily recognized by the user.

In one example, the liquid supply 40 may include a first liquid supply channel 411 and a second liquid supply channel 412 for supplying the water to the cultivator 60 and the storage (not shown) for supplying the water to the cultivator 60, collecting the water therefrom, and storing therein the water.

The first liquid supply channel 411 and the second liquid supply channel 412 may be arranged independently and may extend to face toward the cultivator 60 to supply the water necessary for plant growth thereto.

The first liquid supply channel 411 may be connected to the storage (not shown) and may extend upwards so that the water flows from the storage (not shown) to the channel 411 and moves to the bed water collector 524 of the upper bed 50. The second liquid supply channel 412 may be connected to the storage (not shown) and may extend upwards so that water flows from the storage (not shown) to the channel 412 and moves to the bed water collector 524 of the lower bed 50.

Accordingly, the liquid supply 40 may be constructed to supply the water to each of the upper bed 50 and the lower bed 50.

The liquid supply 40 may have a discharge hole 413 defined at a position corresponding to the bed water collector 524. Thus, the water supplied from each of the first liquid supply channel 411 and the second liquid supply channel 412 may flow directly into the bed water collector 524.

The liquid supply 40 may be embodied as a metal pipe made of a stainless steel. Therefore, the liquid supply 40 may be managed hygienically and may be maintained in a rigid manner to prevent clogging due to deformation or bending of the flow path, and to improve the reliability of liquid supply.

A liquid supply structure in which the water is fed to the upper bed 50 and a liquid supply structure in which the water is fed to the lower bed 50 may be the same only except for a difference in a vertical position thereof. The water supplied to the bed water collector 524 may supply moisture to the cultivator 60 mounted on the bed 50.

Further, each of the first liquid supply channel 411 and the second liquid supply channel 412 may be disposed independently and may extend toward a corresponding cultivator 60 to supply water necessary for plant growth thereto.

The liquid supply casing 42 may be disposed under the bed and may be combined with the cabinet 10. The liquid supply casing 42 may screen the storage (not shown), the supply pump (not shown), the nutrient liquid flow sensor (not shown) and the branching valve (not shown), thereby improving the reliability of the liquid supply 40, and making the outer appearance of the liquid supply 40 neat.

The liquid supply 40 may include the storage (not shown) in which the water to be supplied to the plant is stored, the liquid supply pump connected to the storage (not shown) to pump the water from the storage (not shown) to the liquid supply 40 (not shown). The liquid supply 40 may include the liquid supply casing 42, the components positioned inside the liquid supply casing 42, and pipes connected to these components.

Further, the nutrient liquid flow sensor (not shown) detects the flow rate of the supplied water, and thus may prevent the water from overflowing out of the cultivator 60 due to excessive liquid supply. The amount of water supplied to the cultivator 60 may be adjusted based on a sensing result of the nutrient liquid flow sensor (not shown).

Therefore, the apparatus 1 may supply the cultivator 60 with an optimal amount of water to each of growth stages of the plant to prevent a state in which excessive moisture is not contained in the cultivator 60. This allows the cultivator 60 to be kept clean at all times and maintains adequate humidity in the bed 50 and the cultivation space S1.

That is, an operation of the supply pump (not shown) may allow the water in the storage (not shown) to be supplied to the cultivator 60 or the bed 50 through the branching valve (not shown).

Further, the cultivation vessel 61 may have a nutrient liquid discharge hole 6135 defined in a bottom surface 611 thereof through which internal water therein is discharged to the water discharge channel 512. Water in the cultivation vessel 61 may be introduced thereto from the liquid supply 40 through the nutrient liquid discharge hole 6135 or may return to the liquid supply 40 through the nutrient liquid discharge hole 6135. Further, the nutrient liquid discharge hole 6135 may communicate with the water discharge channel 512 disposed in the bed 50.

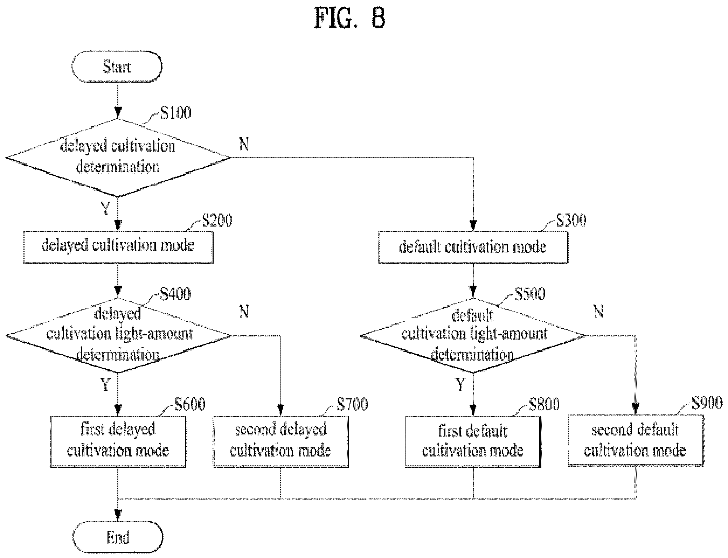

In one example, FIG. 8 is a diagram illustrating several embodiments of a control mode performed by the controller 90 in the plant cultivation apparatus 1 according to an embodiment of the present disclosure. Hereinafter, descriptions duplicated with the above descriptions will be omitted.

The controller 90 may automatically delay the growth rate of the plant based on a harvest stage of the plant. The user may lower the growth rate of the plant by manipulating the display device 1000.

Specifically, the controller 90 may determine whether delayed cultivation of the plant is required based on a matching result between a pre-stored cultivation timing and a growth amount of the plant imaged through the imaging device 1100 in a delayed cultivation determination operation S100. Alternatively, the controller 90 may receive plant type and cultivation day information through an external device (not shown) and determine whether delayed cultivation of the plant inside the plant cultivation apparatus 1 is required based on the received information.

When the controller 90 determines that the delayed cultivation of the plant is required in the delayed cultivation determination operation S100, the delayed cultivation mode S200 for reducing the growth rate of the plant may be performed.

Specifically, in the plant cultivation apparatus 1 according to an embodiment of the present disclosure, the controller 90 may control the air adjuster to reduce the concentration of the carbon dioxide in the cultivation space in the delayed cultivation mode S200.

On the contrary, when the controller 90 determines that the delayed cultivation of the plant is not required in the delayed cultivation determination operation S100, the default cultivation mode S300 of controlling the air adjuster so that the outside-air inflow amount corresponds to a default inflow amount may be performed. The default inflow amount may vary depending on a type of the plant, a size of the plant cultivation apparatus, etc. Depending on the plant's general growth rate, the default inflow amount may be pre-stored in the controller 90.

As described above, the inflow amount of the outside-air may be measured using an outside-air flow sensor (not shown) disposed at the outside-air channel 895 of the outside-air adjuster 89.

In one example, in the delayed cultivation mode S200, the concentration of the carbon dioxide in the cultivation space S1 may be reduced by adjusting the inflow amount of the outside-air flowing from the outside of the cabinet 10 to be different from the default inflow amount.

Specifically, photosynthesis of the plant is achieved via synthesis of the carbon dioxide, the water, and light energy. When the plant inside the cultivation space S1 continues to perform the photosynthesis, the carbon dioxide concentration inside the cultivation space S1 may be lower than the carbon dioxide concentration in a location outside the cabinet 10.

The default cultivation mode S300 may be configured so that the outside-air flows into the cultivation space S1 under the operation of the blower fan 893. In the default cultivation mode S300, the carbon dioxide concentration in the cultivation space S1 may be substantially similar to that in the outside out of the cabinet 10. The carbon dioxide concentration in the cultivation space S1 may be around 400ppm.

In contrast, in the delayed cultivation mode S200, the controller 90 may reduce the concentration of the carbon dioxide in the cultivation space S1 by adjusting the outside-air inflow amount to be different from the default inflow amount. In the delayed cultivation mode S200, the carbon dioxide concentration in the cultivation space S1 may be set to 200 ppm or lower. As a result, the photosynthesis of the plant in the cultivation space S1 may be remarkably suppressed, and thus, the growth of the plant may be delayed.

As described above, reducing the concentration of the carbon dioxide to reduce the growth rate of the plant may result in lower quality of the plant than that achieved by reducing an amount of light energy supplied to the plant.

In one example, the controller 90 of the plant cultivation apparatus 1 according to an embodiment of the present disclosure may control a rotation speed of the blower fan 893 in the delayed cultivation mode S200 to be different from that in the default cultivation mode S300 such that the outside-air inflow amount into the cultivation space in the delayed cultivation mode S200 may be different from the outside-air inflow amount into the cultivation space in the default cultivation mode S300.

For example, the controller 90 may control the rotation speed of the blower fan 893 in the delayed cultivation mode S200 to be lower than that in the default cultivation mode S300 such that the inflow amount of the outside-air into the cultivation space in the delayed cultivation mode S200 is lower than that in the default cultivation mode S300.

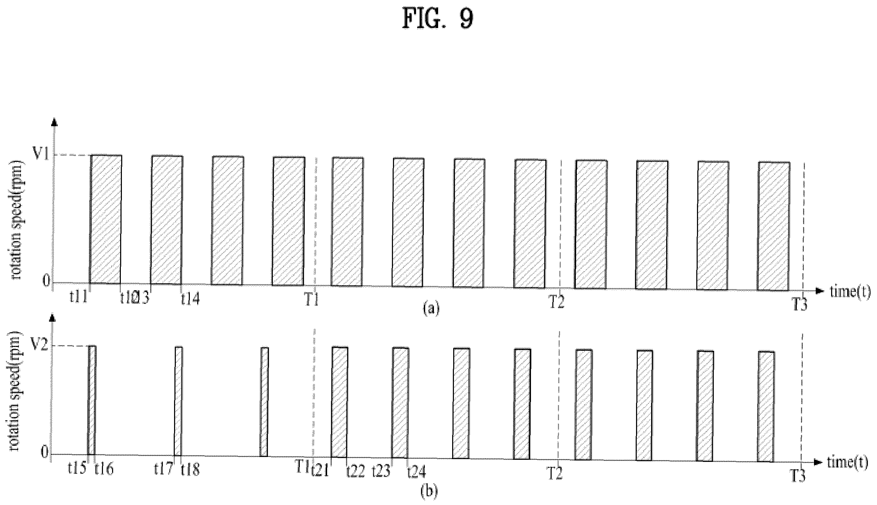

Further, as shown in FIG. 9 to be described later, in the delayed cultivation mode S200, the controller 90 may perform a first disable process in which the rotation of the blower fan 893 is disabled while adjusting a duration or execution times of the first disable process, thereby adjusting the inflow amount of the outside-air.

The controller 90 may perform a plurality of first disable processes in the delayed cultivation mode S200. In an alternative, the controller 90 may alternately perform a plurality of first rotation enable processes in which the rotation of the blower fan 893 is enabled and the first disable processes.

Further, in the default cultivation mode S300, a second disable process in which the rotation of the blower fan 893 is disabled may be performed at least once, while a duration or execution times of the second disable process are different from those of the first disable process. Thus, the inflow amount of the outside-air in the delayed cultivation mode S200 may be adjusted to be different from the default inflow amount.

The controller 90 may perform a plurality of second disable processes in the default cultivation mode S300. In an alternative, the controller 90 may alternately perform a plurality of second rotation enable processes in which the rotation of the blower fan 893 is enabled and the second disable processes.

In one example, the controller 90 may perform the delayed cultivation mode S200 and then may perform a delayed cultivation light-amount determination operation S400 for determining a light-amount required for the plant growth. The delayed cultivation light-amount determination operation S400 may determine the required light-amount according to the user's selection using the display device 1000 or the user's selection using an external device, or may determine the required light-amount based on a growth stage of the plant pre-stored in the controller 90.

When the controller 90 determines that the required light-amount for the plant is greater than or equal to a reference light-amount in the delayed cultivation light-amount determination operation S400, the controller 90 may perform a first delayed cultivation mode S600 in which a daytime mode is simultaneously performed in which the light emitter 70 is controlled so that a light-amount from the light-emitting unit 72 is equal to or greater than the reference light-amount. The daytime mode may refer to a control operation in which the light-emitting unit 72 provides light to the plant to induce the photosynthesis of the plant.

When the controller 90 determines that the required light-amount for the plant is lower than the reference light-amount in the delayed cultivation light-amount determination operation S400, the controller 90 may perform a second delayed cultivation mode S700 in which a night mode is simultaneously performed in which the light emitter 70 is controlled so that the light-amount from the light-emitting unit 72 is lower than the reference light-amount. The night mode may refer to a control operation in which the light-emitting unit 72 reduces an amount of the light applied to the plant, thereby suppressing the plant's photosynthesis. The reference light-amount value may be determined based on a size of each of the cabinet 10, the bed 50, the cultivator 60, and the type of plant.

In one example, the controller 90 may perform the default cultivation mode S300 and then perform a default cultivation light-amount determination operation S500 for determining a light-amount required for the plant growth. In the default cultivation light-amount determination operation S500, the required light-amount may be determined according to the user's selection through the display device 1000 or the user's selection through an external device, or the required light-amount may be determined based on the plant growth stage pre-stored in the controller 90.

When the controller 90 determines that the required light-amount for the plant is greater than or equal to a reference light-amount in the default cultivation light-amount determination operation S500, the controller 90 may perform a first default cultivation mode S800 in which the daytime mode is simultaneously performed in which the light emitter 70 is controlled so that the light-amount from the light-emitting unit 72 is equal to or greater than the reference light-amount.

When the controller 90 determines that the required light-amount for the plant is smaller than the reference light-amount in the delayed cultivation light-amount determination operation S400, the controller 90 may perform a second delayed cultivation mode S700 in which the night mode is simultaneously performed in which the light emitter 70 is controlled so that the light-amount from the light-emitting unit 72 is smaller than the reference light-amount.

In one example, (a) in FIG. 9 is a graph showing a rotation speed of the blower fan 893 over time in the first default cultivation mode S800 performed by the controller 90 in the plant cultivation apparatus 1 according to an embodiment of the present disclosure. (b) in FIG. 9 is a graph showing the rotation speed of the blower fan 893 over time in the first delayed cultivation mode S600 performed by the controller 90 in the plant cultivation apparatus 1 according to an embodiment of the present disclosure. Hereinafter, descriptions duplicate with the above descriptions are omitted.

The controller 90 may allow the duration of the first disable process in the first delayed cultivation mode S600 to be larger than that of the second disable process in the first default cultivation mode S800 or allow the execution times of the first disable process to be greater than that of the second disable process such that the inflow amount of the outside-air in the first delayed cultivation mode S600 may be lower than that in the first default cultivation mode S800. That is, a total execution duration of the first disable process may be adjusted to be larger than that of the second disable process.

For example, when the duration of the first disable process is larger, the execution times of the first disable process may be smaller than that of the second disable process, but a total execution duration of the first disable process may be larger than a total execution duration of the second disable process.

Further, when the execution times of the first disable process are adjusted to be greater than that of the second disable process, the total execution duration of the first disable process may be larger than the total execution duration of the second disable process.

FIG. 9 shows the first delayed cultivation mode S600 in which the duration of the first disable process is adjusted to be larger than the duration of the second disable process according to an embodiment of the present disclosure.

Specifically, hereinafter, a period between 0 second and T1 second may be defined as a germination stage in which the seeds of the plant germinate. A period from T1 second to T2 second may be defined as a growth stage in which the plant grows. A period from T2 second to T3 second may be defined as a harvest stage at which the plant is harvested.

Further, in the first default cultivation mode S800, a rotation speed V1 of the blower fan 893 may be constant in a second rotation enable process. The second disable process may be performed for periods between 0 second and t11 second and between t12 second and t13 second. In other words. The second rotation enable process may be performed between second disable process, and may be performed for periods between t11 second and t12 second and between t13 second and t14.

In the first default cultivation mode S800, the execution duration and the execution times of each of the second disable process and the second rotation enable process may be set to be constant in the germination stage, the growth stage, and the harvest stage. Further, in the first default cultivation mode S800, the outside-air inflow amount of the outside-air introduced under the operation of the blower fan 893 may be equal to the default inflow amount.

Further, in the first delayed cultivation mode S600, a rotation speed V2 of the blower fan 893 may be constant in the first rotation enable process. The first disable process may be performed for periods between 0 second and t15 second, between t16 second and t17 second, and between t22 and t23 second. In other words, the first rotation enable process may be performed between the first disable processes, and may be performed for periods between t15 second and t16 second, and between t17 second and t18.

Unlike the second disable process, the duration of the first disable process in the germination stage may be larger than that in the growth stage. This is because, in the germination stage, the plant does not consume carbon dioxide in the cultivation space S1, and thus, there is no need to introduce the outside-air into the cultivation space S1. Further, the duration of the first disable process in the growth stage may be equal to that in the harvest stage.

The execution duration of the first disable process may be larger than that of the second disable process while the execution times of the first disable process may be smaller than that of the second disable process. Thus, the inflow amount of the outside-air in the first delayed cultivation mode S600 may be lower than that in the first default cultivation mode S800.

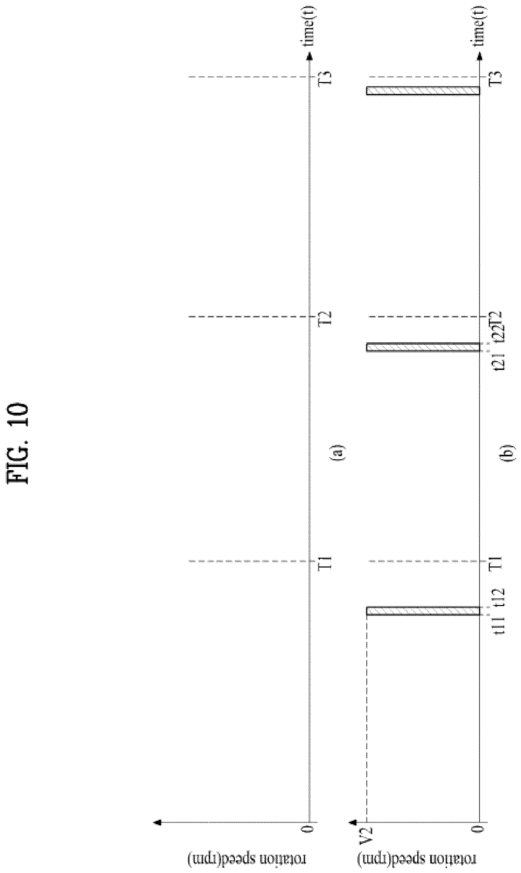

In one example, (a) in FIG. 10 is a graph showing the rotation speed of the blower fan 893 over time in the second default cultivation mode S900 performed by the controller 90 in the plant cultivation apparatus 1 according to an embodiment of the present disclosure. (b) in FIG. 10 is a graph showing the rotation speed of the blower fan 893 over time in the second delayed cultivation mode S700 performed by the controller 90.

The controller 90 may increase the concentration of carbon dioxide in the cultivation space S1 by disabling the operation of the blower fan 893 in the second default cultivation mode S900. Further, the controller 90 may operate the blower fan 893 in the second delayed cultivation mode S700 to adjust the inflow amount of the outside-air to be larger than that in the second default cultivation mode S900. Thus, the concentration of the carbon dioxide in the cultivation space in the second delayed cultivation mode S700 may be lower than that in the second default cultivation mode S900.

Specifically, in the second default cultivation mode S900, photosynthesis of the plant is suppressed, so that the amount of carbon dioxide in the cultivation space S1 is not reduced. Further, because the amount of carbon dioxide in the cultivation space S1 may increase due to respiration of the plant, the amount of carbon dioxide required for the plant growth may be secured even when the outside-air is not introduced into the cultivation space under the operating of the blower fan 893.

On the contrary, in the second delayed cultivation mode S700, the blower fan 893 may be activated to discharge the carbon dioxide in the cultivation space S1 via the respiration of the plant to the outside. That is, the duration of the first disable process in the second delayed cultivation mode may be set to be larger than that in the first delayed cultivation mode S600. The execution times of the first disable process in the second delayed cultivation mode may be set to be greater than that in the first delayed cultivation mode S600.

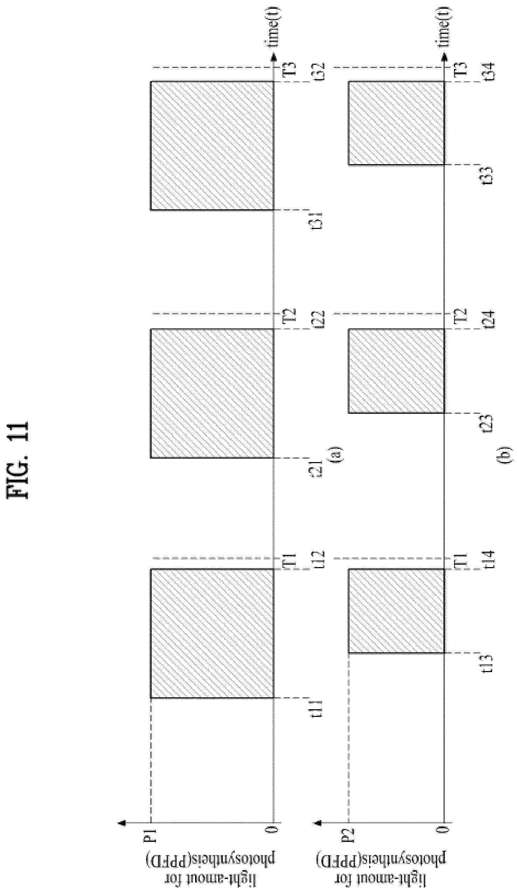

In one example, (a) in FIG. 11 is a graph showing the light-amount of light from the light-emitting unit over time in the default cultivation mode performed by the controller in the plant cultivation apparatus according to an embodiment of the present disclosure. (b) in FIG. 11 is a graph showing the light-amount of light from the light-emitting unit over time in the delayed cultivation mode performed by the controller in the plant cultivation apparatus according to an embodiment of the present disclosure.

A light emission amount P1 from the light-emitting unit 72 in the default cultivation mode S300 may be greater than a light emission amount P2 from the light-emitting unit 72 in the delayed cultivation mode. Accordingly, the photosynthesis of the plant in the delayed cultivation mode may be lower than that in the default cultivation mode. In the default cultivation mode S300, the light emission amount P1 from the light-emitting unit 72 may be set to 300PPFD. The light emission amount P2 from the light-emitting unit 72 in the delayed cultivation mode may be set to a range of 200PPFD to 250PPFD. Depending on the size of the cultivator and the type of the plant, the setting may vary appropriately.

Further, in the default cultivation mode S300, the light emission duration of the light-emitting unit 72 may be set to a period between t11 second and t12 second. The light emission duration of the light-emitting unit 72 in the delayed cultivation mode may be set to a period between t13 second and t14 second. The light emission duration of the light-emitting unit 72 in the default cultivation mode S300 may be set to be larger than the light emission duration of the light-emitting unit 72 in the delayed cultivation mode. Accordingly, the photosynthesis of the plant in the delayed cultivation mode may be lower than that in the default cultivation mode.

For example, during the cultivation period, a total light emission duration of the light-emitting unit 72 in the delayed cultivation mode may be set to a range of 15% to 30% of a total cultivation period. However, the setting may appropriately vary according to the type of the plant.

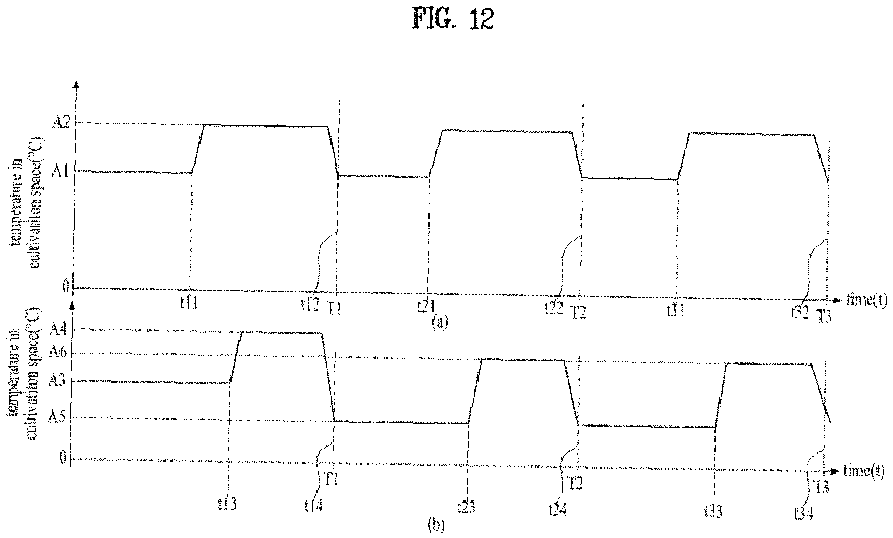

(a) in FIG. 12 is a graph showing a temperature inside the cultivation space S1 over time in the delayed cultivation mode S200 performed by the controller 90 in the plant cultivation apparatus 1 according to an embodiment of the present disclosure. (b) in FIG. 12 is a graph showing the temperature in the cultivation space S1 over time in the default cultivation mode S300 performed by the controller 90 in the plant cultivation apparatus 1 according to an embodiment of the present disclosure.

The plant cultivation apparatus 1 according to an embodiment of the present disclosure may include a temperature measuring device (not shown) S1 disposed inside the cabinet 10 for measuring the temperature of the cultivation space. The temperature measuring device (not shown) may be disposed inside the cultivation space S1.

The temperature inside the cultivation space S1 may vary based on a supply amount of thermal energy into which the light energy of the light irradiated from the light emitter 70 is partially converted and may vary based on a supply amount of heat energy supplied from the temperature adjuster 102.

The temperature adjuster 102 supplies heat to the outside-air flowing into the outside-air channel 895. Thus, the air in the outside-air channel 895 as heated using the heat energy from the temperature adjuster 102 may be supplied from the circulation fan 82 of the inside-air adjuster 81 into the cultivation space S1.

In one example, as shown in (a) in FIG. 12, in the default cultivation mode S300, the controller 90 may perform the second default cultivation mode S900 in which the night mode is performed for periods between 0 second and t11 second, between t12 second and t21 second, and between t22 second and t31 second. In the default cultivation mode S300, the controller 90 may perform the first default cultivation mode S800 in which the daytime mode is performed for periods between t11 second and t12 second, between t21 second and t22 second, and between t31 second and t32 second.

When performing the second default cultivation mode S900, the temperature in the cultivation space S1 may be set to A1 °C. When performing the first default cultivation mode S800, the temperature in the cultivation space S1 may be set to A2 °C.

A value of A1 may be set to a range of 18 degree C to 20 degree C. A value of A2 may be set to a range of 23 degree C to 25 degree C. This is only an example. The settings may appropriately vary according to the type of the plant to be cultivated.

In one example, as shown in (b) in FIG. 12, in the delayed cultivation mode S200, the controller 90 may perform the second delayed cultivation mode S700 in which the night mode is performed for periods between 0 second and t13 second, between t14 second and t23 second, and between t24 second and t33 second. In the delayed cultivation mode S200, the controller 90 may perform the first delayed cultivation mode S600 in which the daytime mode is performed for periods between t13 and t14 second, between t23 and t24, and between t33 and t34 second.

The temperature inside the cultivation space in the delayed cultivation mode S200 may set to be lower than that in the default cultivation mode S300. For example, a value of t13 may be set to be larger than a value of t11.

That is, the execution duration of the first delayed cultivation mode S600 may be set to be smaller than the execution duration of the first default cultivation mode S800. The execution duration of the second delayed cultivation mode S700 may be set to be larger than the execution duration of the second default cultivation mode S900.

Further, when performing the second delayed cultivation mode S700, the temperature in the cultivation space S1 in the germination stage (0 second to T1 second) may be set to A3 °C, while the temperature in the cultivation space S1 in each of the growth stage (T1 second to T2 second) and the harvest stage (T2 second to T3 second) may be set to A5 degree C.

Further, when performing the first delayed cultivation mode S600, the temperature in the cultivation space S1 in the germination stage (0 second to T1 second) may be set to A4 °C, while the temperature in the cultivation space S1 in each of the growth stage (T1 second to T2 second) and the harvest stage (T2 second to T3 second) may be set to A6 degree C.

A value of A3 may be set to be equal to A1 and a value of A4 may be set to be equal to A2 so that the seed of the plant may germinate in the germination stage. A value of A6 may be set to be smaller than that of A2 and a value of A5 may be set to be smaller than that of A1 so as to delay the plant growth in each of the growth stage and the harvest stage.

For example, the value of A5 may be set to a range of 10 degree C to 15 degree C, and the value of A6 may be set to a range of 18 degree C to 20 degree C. However, the disclosure is not necessarily limited thereto. The settings may appropriately vary depending on the type of the plant.

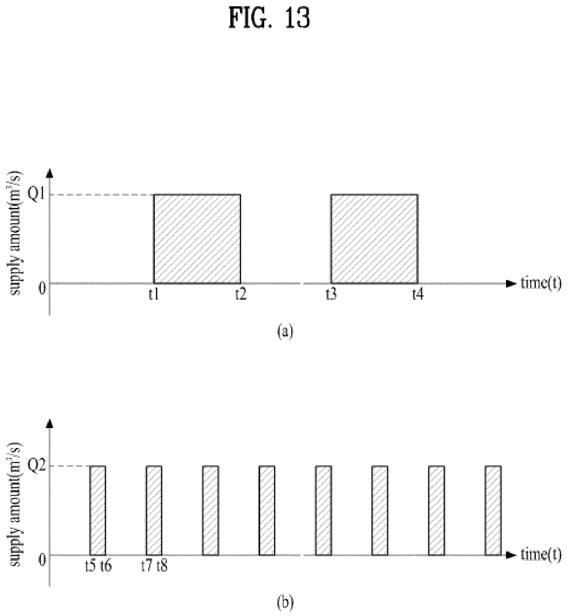

(a) in FIG. 13 is a graph showing a supply amount of nutrient liquid from the liquid supply 40 over time in the default cultivation mode S300 performed by the controller 90 in the plant cultivation apparatus 1 according to an embodiment of the present disclosure. (b) in FIG. 13 is a graph showing the supply amount of nutrient liquid from the liquid supply 40 over time in the delayed cultivation mode S200. Hereinafter, descriptions duplicate with the above descriptions are omitted.

Specifically, the controller 90 may control the liquid supply 40 such that the supply amount of the nutrient liquid supplied to the cultivator 60 in the delayed cultivation mode S200 is lower than that in the default cultivation mode S300, thereby reducing the growth rate of the plant.

As shown, in the default cultivation mode, the controller 90 may open the branching valve (not shown) at t1 second to supply the nutrient liquid at a flow rate of Q1 to the cultivator 60 until a timing reaches t2 second. At the t2 second, the controller 90 may close the branching valve (not shown) to stop supply of the nutrient liquid to the cultivator 60. At t3 second, the branching valve (not shown) may be opened again such that the nutrient liquid may be fed to the cultivator 60 at the flow rate of Q1 until the timing reaches t4 second.

A time duration between t1 second and t2 second and a time duration between t3 second and t4 second may be equal to each other. For periods between t1 and t2 seconds and between t3 and t4 seconds, the water inside the cultivation vessel 61 may be kept at a full level.

Further, a value of t1 may be equal to 0.5 times of t3, and a value of t1 may be set to a range of 1 minute to 2 minutes.

In one example, in the delayed cultivation mode S200, the controller 90 opens the branching valve (not shown) at t5 second to supply the nutrient liquid at a flow rate of Q2 to the cultivator 60 until the timing reaches t6 second. At the t6 second, the controller closes the branching valve (not shown) to stop supply of the nutrient liquid to the cultivator 60. At t7 second, the branching valve (not shown) may be opened again such that the nutrient liquid may be fed to the cultivator at the flow rate of Q2 until the timing reaches t8 second.

A time duration between t5 second and t6 second and a time duration between t7 second and t8 second may be equal to each other. Further, a time duration from 0 second to t5 second may be in a range of two to ten times of a time duration from t5 second to t6 second.

In one example, because a value of Q2 may be set to be smaller than a value of Q1, the supply amount of the nutrient liquid supplied to the cultivator in the delayed cultivation mode S200 may be smaller than that in the default cultivation mode S300, so that the growth rate of the plant may be delayed in the delayed cultivation mode S200.

Although various embodiments of the present disclosure have been described in detail, those of ordinary skill in the art to which the present disclosure pertains may make various modifications to the above-described various embodiments without departing from the scope of the present disclosure. The invention is achieved with the appended claims.

## Claims

1. A plant cultivation apparatus (1) comprising:
a cabinet (10) having a cultivation space (S1) defined therein for the cultivation of a plant;
a bed (50) disposed in the cultivation space;
a cultivator (60) seated on the bed, the cultivator designed to accommodate at least a portion of the plant;
an air adjuster (80) disposed at the cabinet and configured to adjust a carbon dioxide concentration in the cultivation space; and
a controller (90) disposed at the cabinet and configured to control the air adjuster,
wherein the air adjuster includes a blower fan (893) to draw in outside-air,
**characterized in that**:
the controller is configured to perform a default cultivation mode in which the controller controls the air adjuster so that the inflow amount of outside air is equal to a preset default inflow amount, and to perform a delayed cultivation mode in which the controller controls the air adjuster so that the inflow amount of the outside-air is adjusted to be different from the default inflow amount, the carbon dioxide concentration in the delayed cultivation mode being lower than the carbon dioxide concentration in the default cultivation mode to reduce the carbon dioxide concentration to lower a growth rate of the plant.

2. The apparatus of claim 1, wherein the air adjuster includes:
an outside-air channel (895) communicating with an outside of the cabinet;
an outside-air adjuster (89) configured to control a flow of outside-air in the outside-air channel and including the blower fan; and
an inside-air adjuster (81) for connecting the outside-air channel and the cultivation space with each other, the inside-air adjuster including a circulation fan (82) for introducing outside-air delivered through the outside-air channel into the cultivation space.

3. The apparatus of claim 2, wherein the bed divides the cultivation space into a plurality of sub-spaces arranged along one direction,
wherein the outside-air channel extends along said one direction,
wherein the inside-air adjuster includes a plurality of inside-air adjusters respectively communicating with the plurality of sub-spaces of the cultivation space, wherein the plurality of inside-air adjusters are connected to the outside-air channel.

4. The apparatus of any one of claims 1 to 3, wherein the controller is configured to:
perform a first disable process in which rotation of the blower fan is disabled at least once in the delayed cultivation mode; and
adjust a duration or execution times of the first disable process to adjust the inflow amount of outside-air into the cultivation space.

5. The apparatus of claim 4, wherein the controller is configured to:
perform a second disable process in which the rotation of the blower fan is disabled at least once in the default cultivation mode; and
adjust a duration or execution times of the second disable process to be different from the duration or execution times of the first disable process such that the inflow amount of outside-air into the cultivation space in the delayed cultivation mode is adjusted to be different from the inflow amount of outside-air into the cultivation space in the default cultivation mode.

6. The apparatus of claim 5, further comprising a light emitter (70) disposed at the cabinet and including a light-emitting unit for irradiating light toward the cultivator,
wherein the controller is configured to:
perform a daytime mode to control the light emitter so that a light-amount from the light-emitting unit is equal to a preset reference light-amount; and
perform a night mode to control the light emitter so that the light-amount from the light-emitting unit is lower than the reference light-amount.

7. The apparatus of claim 6, wherein the default cultivation mode includes a first default cultivation mode performed in the daytime mode,
wherein the delayed cultivation mode includes a first delayed cultivation mode performed in the daytime mode,
wherein the controller is configured to:
adjust a total execution duration of the first disable process in the first delayed cultivation mode to be larger than a total execution duration of the second disable process in the first default cultivation mode, thereby controlling the inflow amount of outside-air in the first delayed cultivation mode to be lower than the inflow amount of outside-air in the first default cultivation mode.

8. The apparatus of claim 7, wherein the controller is configured to adjust the duration of a one-time execution of the first disable process in the first delayed cultivation mode to be larger than the duration of a one-time execution of the second disable process in the first default cultivation mode, and/or to adjust execution times of the first disable process to be greater than execution times of the second disable process, such that the inflow amount of outside-air in the first delayed cultivation mode is lower than the inflow amount of outside-air in the first default cultivation mode.

9. The apparatus of any one of claims 6 to 8, wherein the default cultivation mode includes a second default cultivation mode performed in the night mode,
wherein the delayed cultivation mode includes a second delayed cultivation mode performed in the night mode,
wherein the controller is configured to disable an operation of the blower fan in the second default cultivation mode to increase a concentration of carbon dioxide in the cultivation space.

10. The apparatus of claim 9, wherein the controller is configured to operate the blower fan in the second delayed cultivation mode to control the inflow amount of outside-air in the second delayed cultivation mode to be larger than the inflow amount of outside-air in the second default cultivation mode, thereby controlling the concentration of carbon dioxide in the cultivation space in the second delayed cultivation mode to be lower than the concentration of carbon dioxide in the cultivation space in the second default cultivation mode.

11. The apparatus of any one of claims 2 to 10, further comprising a temperature adjuster (102) disposed at the cabinet to control a temperature of air flowing into the cultivation space,
wherein the controller is configured to control the temperature adjuster so that the temperature of the cultivation space in the delayed cultivation mode is lower than the temperature of the cultivation space in the default cultivation mode, thereby lowering the growth rate of the plant in the delayed cultivation mode.

12. The apparatus of any one of claims 2 to 11, further comprising a liquid supply (40) disposed at the cabinet to supply nutrient liquid to the cultivator,
wherein the controller is configured to control the liquid supply so that a supply amount of the nutrient liquid supplied to the cultivator in the delayed cultivation mode is lower than a supply amount of the nutrient liquid supplied to the cultivator in the default cultivation mode, thereby lowering the growth rate of the plant in the delayed cultivation mode.

## Patentansprüche

1. Pflanzenzuchtvorrichtung (1), umfassend:
ein Gehäuse (10) mit einem darin definierten Anbauraum (S1) für den Anbau einer Pflanze;
ein Bett (50), das in dem Anbauraum angeordnet ist;
einen Kultivator (60), der auf dem Beet sitzt und so ausgelegt ist, dass er mindestens einen Teil der Pflanze aufnehmen kann;
einen Luftregler (80), der an dem Schrank angeordnet ist und dazu eingerichtet ist, die Kohlendioxidkonzentration im Anbauraum zu regulieren; und
eine Steuereinheit (90), die an dem Gehäuse angeordnet ist, und dazu eingerichtet ist, den Luftregler zu steuern,
wobei der Luftregler ein Gebläse (893) zum Ansaugen von Außenluft umfasst,
**dadurch gekennzeichnet, dass**:
die Steuerung dazu eingerichtet ist, einen Standard-Anbaumodus auszuführen, in dem die Steuerung den Luftregler so steuert, dass die Zufuhrmenge der Außenluft einer voreingestellten Standard-Zufuhrmenge entspricht, und einen verzögerten Anbaumodus auszuführen, in dem die Steuerung den Luftregler so steuert, dass die Zufuhrmenge der Außenluft so eingestellt wird, dass sie sich von der Standard-Zufuhrmenge unterscheidet, wobei die Kohlendioxidkonzentration im verzögerten Anbaumodus niedriger ist als die Kohlendioxidkonzentration im Standard-Anbaumodus, um die Kohlendioxidkonzentration zu reduzieren und die Wachstumsrate der Pflanze zu senken.

2. Vorrichtung nach Anspruch 1, wobei der Luftregler umfasst:
einen Außenluftkanal (895), der mit einer Außenseite des Gehäuses in Verbindung steht;
einen Außenluftregler (89), der dazu eingerichtet ist, einen Außenluftstrom in dem Außenluftkanal zu steuern, und der das Gebläse umfasst; und
einen Innenluftregler (81) zum Verbinden des Außenluftkanals mit dem Anbauraum, wobei der Innenluftregler einen Umwälzventilator (82) zum Einleiten von durch den Außenluftkanal zugeführter Außenluft in den Anbauraum umfasst.

3. Vorrichtung nach Anspruch 2, wobei das Bett den Anbauraum in mehrere Teilräume unterteilt, die entlang einer Richtung angeordnet sind,
wobei sich der Außenluftkanal entlang dieser einen Richtung erstreckt,
wobei der Innenluftregler mehrere Innenluftregler umfasst, die jeweils mit den mehreren Teilräumen des Anbauraums in Verbindung stehen, wobei die mehreren Innenluftregler mit dem Außenluftkanal verbunden sind.

4. Vorrichtung nach einem der Ansprüche 1 bis 3, wobei die Steuereinheit eingerichtet ist zum:
Durchführen eines ersten Deaktivierungsprozesses, bei dem die Drehung des Gebläses mindestens einmal im verzögerten Anbaumodus deaktiviert wird; und
Anpassen einer Dauer oder von Ausführungszeiten des ersten Deaktivierungsprozesses, um die Einströmmenge von Außenluft in den Anbauraum anzupassen.

5. Vorrichtung nach Anspruch 4, wobei die Steuereinheit eingerichtet ist zum:
Durchführen eines zweiten Deaktivierungsprozesses, bei dem die Drehung des Gebläses mindestens einmal im Standard-Anbaumodus deaktiviert wird; und
Anpassen einer Dauer oder vom Ausführungszeiten des zweiten Deaktivierungsprozesses, so dass sie sich von der Dauer oder den Ausführungszeiten des ersten Deaktivierungsprozesses unterscheiden, sodass die Zufuhrmenge an Außenluft in den Anbauraum im verzögerten Anbaumodus so angepasst wird, dass sie sich von der Zufuhrmenge an Außenluft in den Anbauraum im Standard-Anbaumodus unterscheidet.

6. Vorrichtung nach Anspruch 5, die ferner einen Lichtemitter (70) umfasst, der an dem Gehäuse angeordnet ist und eine Lichtemissionseinheit zum Bestrahlen des Kultivators mit Licht umfasst,
wobei die Steuereinheit eingerichtet ist zum:
Ausführen eines Tagesmodus, um den Lichtemitter so zu steuern, dass eine Lichtmenge von der Lichtemissionseinheit einer voreingestellten Referenzlichtmenge entspricht; und
Ausführen eines Nachtmodus, um den Lichtemitter so zu steuern, dass die Lichtmenge aus der Lichtemissionseinheit geringer ist als die Referenzlichtmenge.

7. Vorrichtung nach Anspruch 6, wobei der Standard-Anbaumodus einen ersten Standard-Anbaumodus umfasst, der im Tagesmodus ausgeführt wird,
wobei der verzögerte Anbaumodus einen ersten verzögerten Anbaumodus umfasst, der im Tagesmodus ausgeführt wird,
wobei die Steuereinheit eingerichtet ist zum:
Einstellen einer Gesamtdurchführungsdauer des ersten Deaktivierungsprozesses im ersten verzögerten Anbaumodus, sodass sie größer ist als eine Gesamtdurchführungsdauer des zweiten Deaktivierungsprozesses im ersten Standard-Anbaumodus, wodurch die Zufuhrmenge an Außenluft im ersten verzögerten Anbaumodus so gesteuert wird, dass sie geringer ist als die Zufuhrmenge an Außenluft im ersten Standard-Anbaumodus.

8. Vorrichtung nach Anspruch 7, wobei die Steuereinheit dazu eingerichtet ist, die Dauer einer einmaligen Ausführung des ersten Deaktivierungsprozesses im ersten verzögerten Anbaumodus so einzustellen, dass sie größer ist als die Dauer einer einmaligen Ausführung des zweiten Deaktivierungsprozesses im ersten Standard-Anbaumodus, und/oder die Ausführungszeiten des ersten Deaktivierungsprozesses so einzustellen, dass sie größer sind als die Ausführungszeiten des zweiten Deaktivierungsprozesses, sodass die Zufuhrmenge an Außenluft im ersten verzögerten Anbaumodus geringer ist als die Zufuhrmenge an Außenluft im ersten Standard-Anbaumodus.

9. Vorrichtung nach einem der Ansprüche 6 bis 8, wobei der Standard-Anbaumodus einen zweiten Standard-Anbaumodus umfasst, der im Nachtmodus durchgeführt wird,
wobei der verzögerte Anbaumodus einen zweiten verzögerten Anbaumodus umfasst, der im Nachtmodus durchgeführt wird,
wobei die Steuereinheit dazu eingerichtet ist, einen Betrieb des Gebläses im zweiten Standard-Anbaumodus zu deaktivieren, um die Kohlendioxidkonzentration im Anbauraum zu erhöhen.

10. Vorrichtung nach Anspruch 9, wobei die Steuereinheit dazu eingerichtet ist, das Gebläse im zweiten verzögerten Anbaumodus so zu betreiben, dass die Zufuhrmenge an Außenluft im zweiten verzögerten Anbaumodus größer ist als die Zufuhrmenge an Außenluft im zweiten Standard-Anbaumodus, wodurch die Kohlendioxidkonzentration im Anbauraum im zweiten verzögerten Anbaumodus so gesteuert wird, dass sie niedriger ist als die Kohlendioxidkonzentration im Anbauraum im zweiten Standard-Anbaumodus.

11. Vorrichtung nach einem der Ansprüche 2 bis 10, die ferner einen Temperaturregler (102) umfasst, der an dem Gehäuse angeordnet ist, um eine Temperatur der in den Anbauraum strömenden Luft zu steuern,
wobei die Steuereinheit dazu eingerichtet ist, den Temperaturregler so zu steuern, dass die Temperatur des Anbauraums im verzögerten Anbaumodus niedriger ist als die Temperatur des Anbauraums im Standard-Anbaumodus, wodurch die Wachstumsrate der Pflanze im verzögerten Anbaumodus verringert wird.

12. Vorrichtung nach einem der Ansprüche 2 bis 11, die ferner eine Flüssigkeitszufuhr (40) umfasst, die an dem Gehäuse angeordnet ist, um dem Kultivator Nährflüssigkeit zuzuführen,
wobei die Steuereinheit dazu eingerichtet ist, die Flüssigkeitszufuhr so zu steuern, dass die dem Kultivator im verzögerten Anbaumodus zugeführte Nährflüssigkeitsmenge geringer ist als die dem Kultivator im Standard-Anbaumodus zugeführte Nährflüssigkeitsmenge, wodurch die Wachstumsrate der Pflanze im verzögerten Anbaumodus verringert wird.

## Revendications

1. Appareil de culture de plante (1) comprenant:
une armoire (10) comportant un espace de culture (S1) formé en son sein pour la culture d'une plante;
un lit (50) disposé dans l'espace de culture;
un cultivateur (60) placé sur le lit, le cultivateur étant conçu pour recevoir au moins une partie d'une plante;
un régulateur d'air (80) disposé dans l'armoire et conçu pour réguler la concentration en dioxyde de carbone dans l'espace de culture; et
un organe de commande (90) disposé dans l'armoire et conçu pour commander le régulateur d'air,
dans lequel le régulateur d'air comprend un un ventilateur soufflant (893) pour aspirer l'air extérieur,
**caractérisé en ce que**:
l'organe de commande est conçu pour exécuter un mode de culture par défaut dans lequel l'organe de commande règle le régulateur d'air de manière à ce que le débit d'air extérieur entrant soit égal à un débit d'air entrant par défaut prédéfinie, et pour exécuter un mode de culture différée dans lequel l'organe de commande règle le régulateur d'air de manière à ce que le débit d'air extérieur entrant soit ajusté pour être différent du débit entrant par défaut, la concentration en dioxyde de carbone dans le mode de culture différée étant inférieure à la concentration en dioxyde de carbone dans le mode de culture par défaut afin de réduire la concentration en dioxyde de carbone pour diminuer le taux de croissance de la plante.

2. Appareil selon la revendication 1, dans lequel le régulateur d'air comprend:
un canal d'air extérieur (895) communiquant avec l'extérieur de l'armoire;
un régulateur d'air extérieur (89) conçu pour réguler un flux d'air extérieur dans le canal d'air extérieur et comprenant le ventilateur soufflant; et
un régulateur d'air intérieur (81) pour relier le conduit d'air extérieur et l'espace de culture entre eux, le régulateur d'air intérieur comprenant un ventilateur de circulation (82) pour introduire l'air extérieur acheminé par le conduit d'air extérieur dans l'espace de culture.

3. Appareil selon la revendication 2, dans lequel le lit divise l'espace de culture en une pluralité de sous-espaces disposés dans une seule direction,
dans lequel le canal d'air extérieur part dans ladite direction,
dans lequel le régulateur d'air intérieur comprend une pluralité de régulateur d'air intérieur communiquant respectivement avec la pluralité de sous-espaces de l'espace de culture, la pluralité de régulateurs d'air intérieur étant reliés au canal d'air extérieur.

4. Appareil selon l'une quelconque des revendications 1 à 3, dans lequel l'organe de commande (12) est conçu pour:
effectuer un premier processus de désactivation dans lequel la rotation du ventilateur soufflant est désactivée au moins une fois en mode de culture différée; et
ajuster la durée ou les temps d'exécution du premier processus de désactivation afin d'ajuster le débit d'air extérieur entrant dans l'espace de culture.

5. Appareil selon la revendication 4, dans lequel l'organe de commande est conçu pour:
effectuer un deuxième processus de désactivation dans lequel la rotation du ventilateur soufflant est désactivée au moins une fois dans le mode de culture par défaut; et
ajuster la durée ou les temps d'exécution du deuxième processus de désactivation afin qu'ils diffèrent de la durée ou des temps d'exécution du premier processus de désactivation, de telle sorte que le débit d'air extérieur entrant dans l'espace de culture en mode de culture différée soit ajusté pour être différent du débit d'air extérieur entrant dans l'espace de culture en mode de culture par défaut.

6. Appareil selon la revendication 5, comprenant en outre un émetteur de lumière (70) disposé au niveau de l'armoire et comprenant une unité d'émission de lumière pour émettre la lumière en direction le cultivateur,
dans lequel l'organe de commande est conçu pour:
exécuter un mode diurne pour commander l'émetteur de lumière de manière à ce que la quantité de lumière émise par l'unité d'émission de lumière soit égale à une quantité de lumière de référence prédéfinie; et
activer un mode nuit pour commander l'émetteur de lumière de manière à ce que la quantité de lumière émise par l'unité d'émission de lumière soit inférieure à la quantité de lumière de référence.

7. Appareil selon la revendication 6, dans lequel le mode de culture par défaut comprend un premier mode de culture par défaut exécuté en mode diurne,
dans lequel le mode de culture différée comprend un premier mode de culture différée exécuté en mode diurne,
dans lequel l'organe de commande est conçu pour:
ajuster la durée totale d'exécution du premier processus de désactivation dans le premier mode de culture différée afin qu'elle soit supérieure à la durée totale d'exécution du deuxième processus de désactivation dans le premier mode de culture par défaut, amenant ainsi le débit d'air extérieur dans le premier mode de culture différée à être inférieur au débit d'air extérieur dans le premier mode de culture par défaut.

8. Appareil selon la revendication 7, dans lequel l'organe de commande est conçu pour ajuster la durée d'une exécution unique du premier processus de désactivation dans le premier mode de culture différée afin qu'elle soit supérieure à la durée d'une exécution unique du deuxième processus de désactivation dans le premier mode de culture par défaut, et/ou ajuster les temps d'exécution du premier processus de désactivation pour qu'ils soient supérieurs aux temps d'exécution du deuxième processus de désactivation, de telle sorte que le débit d'air extérieur entrant dans le premier mode de culture différée soit inférieur au débit d'air extérieur entrant dans le premier mode de culture par défaut.

9. Appareil selon l'une quelconque des revendications 6 à 8, dans lequel le mode de culture par défaut comprend un deuxième mode de culture par défaut exécuté en mode nuit,
dans lequel le mode de culture différée comprend un second mode de culture différée exécuté en mode nuit,
dans lequel l'organe de commande est conçu pour désactiver le ventilateur soufflant dans le second mode de culture par défaut afin d'augmenter la concentration de dioxyde de carbone dans l'espace de culture.

10. Appareil selon la revendication 9, dans lequel l'organe de commande est conçu pour faire fonctionner le ventilateur soufflant dans le deuxième mode de culture différée afin de réguler le débit d'air extérieur dans le deuxième mode de culture différée de manière à ce qu'il soit supérieur au débit d'air extérieur dans le deuxième mode de culture par défaut, régulant ainsi la concentration de dioxyde de carbone dans l'espace de culture dans le deuxième mode de culture différée de manière à ce qu'elle soit inférieure à la concentration de dioxyde de carbone dans l'espace de culture dans le deuxième mode de culture par défaut.

11. Appareil selon l'une quelconque des revendications 2 à 10, comprenant en outre un régulateur de température (102) disposé dans l'armoire pour réguler la température de l'air entrant dans l'espace de culture,
dans lequel l'organe de commande est conçu pour régler le dispositif de réglage de la température de manière à ce que la température de l'espace de culture en mode de culture différée soit inférieure à la température de l'espace de culture en mode de culture par défaut, réduisant ainsi la vitesse de croissance de la plante en mode de culture différée.

12. Appareil selon l'une quelconque des revendications 2 à 11, comprenant en outre une alimentation en liquide (40) disposée au niveau de l'armoire pour alimenter en liquide nutritif le cultivateur,
dans lequel l'organe de commande est conçu pour régler l'alimentation en liquide de telle sorte que la quantité de liquide nutritif fournie au cultivateur en mode de culture différée soit inférieure à la quantité de liquide nutritif fournie au cultivateur en mode de culture par défaut, réduisant ainsi le taux de croissance de la plante en mode de culture différée.
